# EUROPEAN PATENT APPLICATION

(11) **EP 4 746 558 A1**
(43) Date of publication of application: **20.05.2026**
(21) Application number: 24851135.4
(22) Date of filing: 09.08.2024
(51) Int. Cl.: H04W 72/1268

(54) **COMMUNICATION METHOD AND APPARATUS**

(30) Priority: 10.08.2023 CN 202311006953; 02.01.2024 CN 202410006825
(71) Applicant: Huawei Technologies Co., Ltd., Shenzhen, Guangdong 518129 (CN)
(72) Inventor: JIAO, Shurong, Shenzhen, Guangdong 518129 (CN); HUA, Meng, Shenzhen, Guangdong 518129 (CN); LI, Jun, Shenzhen, Guangdong 518129 (CN)
(74) Representative: Pfenning, Meinig & Partner mbB
(86) International application number: PCT/CN2024/111158
(87) International publication number: WO 2025/031491

(57) **Abstract**

Embodiments of this application relate to the field of communication technologies, and provide a communication method and apparatus to process a plurality of to-be-sent uplink signals. The method includes: A terminal apparatus multiplexes a plurality of to-be-sent uplink signals in a first uplink channel, where the plurality of to-be-sent uplink signals include an uplink signal that is not allowed to be sent by the terminal apparatus within a non-active time of discontinuous transmission. The terminal apparatus determines a first time domain resource for sending the first uplink channel, where the first time domain resource overlaps with the non-active time of the discontinuous transmission.

## Description

### CROSS-REFERENCE TO RELATED APPLICATIONS

This application claims priorities to Chinese Patent Application No. 202311006953.4, filed with the China National Intellectual Property Administration on August 10, 2023 and entitled "COMMUNICATION METHOD AND APPARATUS"; and to Chinese Patent Application No. 202410006825.8, filed with the China National Intellectual Property Administration on January 2, 2024 and entitled "COMMUNICATION METHOD AND APPARATUS", both of which are incorporated herein by reference in its entireties.

### TECHNICAL FIELD

This application relates to the field of communication technologies, and in particular, to a communication method and apparatus.

### BACKGROUND

In a new radio (new radio, NR) standard, uplink channels include but are not limited to a physical uplink control channel (physical uplink control channel, PUCCH) and a physical uplink shared channel (physical uplink shared channel, PUSCH). The PUCCH can carry an uplink control signal. For a plurality of uplink carriers in a same PUCCH group, the PUCCH can be sent on a maximum of only one uplink carrier at a same moment. If a plurality of PUCCHs configured for a plurality of uplink control signals overlap in time domain, these uplink control signals need to be multiplexed in one PUCCH, in other words, one PUCCH is used to carry these uplink control signals. The PUSCH can carry uplink data and/or some uplink control signals. For a plurality of uplink carriers in a same PUCCH group, if the PUCCH and the PUSCH overlap at a same moment, regardless of whether the PUCCH and the PUSCH are on a same uplink carrier, the PUCCH and the PUSCH cannot be simultaneously sent. If the PUCCH and the PUSCH overlap in time domain, the uplink control signal carried on the PUCCH needs to be multiplexed in the PUSCH, or the uplink control signal carried on the PUCCH needs to be discarded.

To reduce power consumption of a base station, a discontinuous transmission mechanism is introduced. The discontinuous transmission mechanism includes an active time and a non-active time. The base station may receive, within the active time of discontinuous transmission, an uplink signal sent by a terminal apparatus. In other words, the terminal apparatus is allowed to send the uplink signal within the active time of the discontinuous transmission. The base station may not receive some uplink signals within the non-active time of the discontinuous transmission, to reduce power consumption. In other words, the terminal apparatus is not allowed to send these uplink signals within the non-active time of the discontinuous transmission.

When a plurality of uplink channels configured for a plurality of to-be-sent uplink signals overlap in time domain within the non-active time of the discontinuous transmission, and the plurality of to-be-sent uplink signals include an uplink signal that is not allowed to be sent by the terminal apparatus within the non-active time of the discontinuous transmission, there is still no corresponding solution to how to process the plurality of to-be-sent uplink signals.

### SUMMARY

Embodiments of this application provide a communication method and apparatus, to process a plurality of to-be-sent uplink signals when a plurality of uplink channels configured for the plurality of to-be-sent uplink signals overlap in time domain within a non-active time of discontinuous transmission and the plurality of to-be-sent uplink signals include an uplink signal that is not allowed to be sent by a terminal apparatus within the non-active time of the discontinuous transmission.

According to a first aspect, this application provides a communication method. The method may be performed by a terminal apparatus, or may be performed by a component in the terminal apparatus. This is not limited. In the method, the terminal apparatus multiplexes a plurality of to-be-sent uplink signals in a first uplink channel, where the plurality of to-be-sent uplink signals include an uplink signal that is not allowed to be sent by the terminal apparatus within a non-active time of discontinuous transmission; and determines a first time domain resource for sending the first uplink channel, where the first time domain resource overlaps with the non-active time of the discontinuous transmission.

For example, the discontinuous transmission may be cell discontinuous reception (cell discontinuous reception, Cell DRX).

In the foregoing embodiment, the terminal apparatus multiplexes, in the first uplink channel, the plurality of to-be-sent uplink signals that include an uplink signal that is not allowed to be sent by the terminal apparatus within the non-active time of the discontinuous transmission, and determines the first time domain resource for sending the first uplink channel. In this way, even if the plurality of to-be-sent uplink signals include an uplink signal that is not allowed to be sent by the terminal apparatus within the non-active time of the discontinuous transmission, the terminal apparatus may send the plurality of to-be-sent uplink signals to a network apparatus through the first uplink channel within the non-active time of the discontinuous transmission, to process the plurality of to-be-sent uplink signals.

In a possible implementation, the plurality of to-be-sent uplink signals include an uplink signal that is allowed to be sent by the terminal apparatus within the non-active time of the discontinuous transmission; or the first uplink channel is an uplink channel that is allowed to be sent by the terminal apparatus within the non-active time of the discontinuous transmission; or the plurality of to-be-sent uplink signals include an uplink signal that is allowed to be sent by the terminal apparatus within the non-active time of the discontinuous transmission, and the first uplink channel is an uplink channel that is allowed to be sent by the terminal apparatus within the non-active time of the discontinuous transmission.

In the foregoing implementation, when the plurality of to-be-sent uplink signals include an uplink signal that is allowed to be sent by the terminal apparatus within the non-active time of the discontinuous transmission and/or the first uplink channel is an uplink channel that is allowed to be sent by the terminal apparatus within the non-active time of the discontinuous transmission, even if the to-be-sent uplink signals include an uplink signal that is not allowed to be sent by the terminal apparatus within the non-active time of the discontinuous transmission, the terminal apparatus may send the plurality of to-be-sent uplink signals to the network apparatus through the first uplink channel.

In a possible implementation, the plurality of to-be-sent uplink signals include a first uplink signal, and before the plurality of to-be-sent uplink signals are multiplexed in the first uplink channel, the terminal apparatus may further determine that the first uplink signal is an uplink signal that is allowed to be sent by the terminal apparatus within the non-active time of the discontinuous transmission. Alternatively, the plurality of to-be-sent uplink signals include a first uplink signal, and after the plurality of to-be-sent uplink signals are multiplexed in the first uplink channel, the terminal apparatus may further determine that the first uplink signal is an uplink signal that is allowed to be sent by the terminal apparatus within the non-active time of the discontinuous transmission, and determine to send the plurality of to-be-sent uplink signals to the network apparatus. Alternatively, the terminal apparatus may further determine that the first uplink channel is an uplink channel that is allowed to be sent by the terminal apparatus within the non-active time of the discontinuous transmission, and determine to send the plurality of to-be-sent uplink signals to the network apparatus. Alternatively, the terminal apparatus may further determine that a first uplink signal is an uplink signal that is allowed to be sent by the terminal apparatus within the non-active time of the discontinuous transmission, and the first uplink channel is an uplink channel that is allowed to be sent by the terminal apparatus within the non-active time of the discontinuous transmission, and determine to send the plurality of to-be-sent uplink signals to the network apparatus.

In a possible implementation, the plurality of to-be-sent uplink signals include the first uplink signal, and the terminal apparatus may further perform the following content: if the first uplink channel is a control channel, determining that the first uplink signal is an uplink signal that is allowed to be sent by the terminal apparatus within the non-active time of the discontinuous transmission, and determining to send the plurality of to-be-sent uplink signals to the network apparatus; or if the first uplink channel is a data channel, determining that the first uplink channel is an uplink channel that is allowed to be sent by the terminal apparatus within the non-active time of the discontinuous transmission, and determining to send the plurality of to-be-sent uplink signals to the network apparatus; or if the plurality of to-be-sent uplink signals include a hybrid automatic repeat request acknowledgement HARQ ACK signal, determining that the first uplink signal is an uplink signal that is allowed to be sent by the terminal apparatus within the non-active time of the discontinuous transmission, and determining to send the plurality of to-be-sent uplink signals to the network apparatus; or if the plurality of to-be-sent uplink signals include no HARQ ACK signal, determining that the first uplink channel is an uplink channel that is allowed to be sent by the terminal apparatus within the non-active time of the discontinuous transmission, and determining to send the plurality of to-be-sent uplink signals to the network apparatus.

In the foregoing implementation, the terminal apparatus may determine a processing manner of the plurality of to-be-sent uplink signals based on types of the plurality of to-be-sent uplink signals or a type of the first uplink channel. This implementation is flexible.

In a possible implementation, the plurality of to-be-sent uplink signals each are a control signal, the first uplink channel is a control channel, and the terminal apparatus may further determine a second uplink channel configured for at least one piece of to-be-sent uplink data; determine a second time domain resource for sending the second uplink channel, where the second time domain resource overlaps with the non-active time of the discontinuous transmission, and the second time domain resource further overlaps with the first time domain resource; and multiplex the plurality of to-be-sent uplink signals and the at least one piece of to-be-sent uplink data in the second uplink channel. Optionally, the at least one piece of to-be-sent uplink data is data that is allowed to be sent by the terminal apparatus within the non-active time of the discontinuous transmission.

In a possible implementation, the plurality of to-be-sent uplink signals may include a first HARQ ACK signal, and a processing manner of the plurality of to-be-sent uplink signals may be as follows:
After the plurality of to-be-sent uplink signals are multiplexed in the first uplink channel, the terminal apparatus may further determine that a priority of the first HARQ ACK signal is higher than a priority of a second uplink signal, and determine to send the plurality of to-be-sent uplink signals to the network apparatus, where the second uplink signal is an uplink signal other than the first HARQ ACK signal in the plurality of to-be-sent uplink signals.

Alternatively, after the plurality of to-be-sent uplink signals are multiplexed in the first uplink channel, the terminal apparatus may further determine that a priority of the first HARQ ACK signal is higher than a priority of the first uplink channel, and determine to send the plurality of to-be-sent uplink signals to the network apparatus, where the first uplink channel may be an uplink channel that is not allowed to be sent by the terminal apparatus within the non-active time of the discontinuous transmission.

Alternatively, after the plurality of to-be-sent uplink signals are multiplexed in the first uplink channel, the terminal apparatus may further determine that a priority of the first HARQ ACK signal is a high priority, and determine to send the plurality of to-be-sent uplink signals to the network apparatus.

In the foregoing implementation, the plurality of to-be-sent uplink signals include the first HARQ ACK signal, and the terminal apparatus may determine the processing manner of the plurality of to-be-sent uplink signals based on priority information of the HARQ ACK signal. This implementation is flexible.

In a possible implementation, the plurality of to-be-sent uplink signals include a control signal that is not allowed to be sent by the terminal apparatus within the non-active time of the discontinuous transmission, and the terminal apparatus may further receive fourth indication information from the network apparatus, where the fourth indication information may indicate a configuration of enhanced uplink skip. Further, after the plurality of to-be-sent uplink signals are multiplexed in the first uplink channel, the terminal apparatus may further determine that the plurality of to-be-sent uplink signals include uplink data, and determine to send the plurality of to-be-sent uplink signals to the network apparatus; or after the plurality of to-be-sent uplink signals are multiplexed in the first uplink channel, the terminal apparatus may further determine that the plurality of to-be-sent uplink signals include no uplink data, and determine not to send the plurality of to-be-sent uplink signals to the network apparatus. The first uplink channel is a first data channel, and the first data channel is an uplink channel that is allowed to be sent by the terminal apparatus within the non-active time of the discontinuous transmission.

In the foregoing implementation, in a case in which enhanced uplink skip is configured, the terminal apparatus may process the plurality of to-be-sent uplink signals.

In a possible implementation, the first time domain resource further overlaps with a time domain resource occupied by a first reference signal, and a processing manner of the first reference signal and the plurality of to-be-sent uplink signals is as follows:
The terminal apparatus may further first determine to discard the first reference signal, and then determine whether to send the plurality of to-be-sent uplink signals to the network apparatus, where the plurality of to-be-sent uplink signals include a HARQ ACK signal or a scheduling request, or the first uplink channel is a dynamically scheduled data channel or a configured grant data channel.

Alternatively, the terminal apparatus may further first determine to send the plurality of to-be-sent uplink signals to the network apparatus, and then determine to discard the first reference signal, where the plurality of to-be-sent uplink signals include a HARQ ACK signal, or the plurality of to-be-sent uplink signals include a scheduling request, or the first uplink channel is a dynamically scheduled data channel, or the first uplink channel is a configured grant data channel.

Alternatively, the terminal apparatus may further first determine not to send the plurality of to-be-sent uplink signals to the network apparatus, and determine to send the first reference signal to the network apparatus. Optionally, the first reference signal may be an uplink signal that is allowed to be sent by the terminal apparatus within the non-active time of the discontinuous transmission.

Optionally, the first reference signal may be a sounding reference signal.

In the foregoing implementation, when the first time domain resource further overlaps with the time domain resource occupied by the first reference signal, the terminal apparatus may process the first reference signal and the plurality of to-be-sent uplink signals.

In a possible implementation, the terminal apparatus may further receive first indication information from the network apparatus, where the first indication information indicates a configuration of the discontinuous transmission, and the configuration of the discontinuous transmission is used to determine an active time of the discontinuous transmission.

In a possible implementation, the terminal apparatus may further send the plurality of to-be-sent uplink signals to the network apparatus.

According to a second aspect, this application provides a communication method. The method may be performed by a terminal apparatus, or may be performed by a component in the terminal apparatus. This is not limited. In the method, the terminal apparatus determines a fifth time domain resource for sending a fourth uplink channel, where the fourth uplink channel is used to carry channel state information, or the fourth uplink channel is used to carry layer 1 reference signal received power, or the fourth uplink channel is an uplink channel in which a plurality of to-be-sent uplink signals are multiplexed, and an uplink signal carried on the fourth uplink channel includes an uplink signal that is not allowed to be sent by the terminal apparatus within a non-active time of discontinuous transmission; when the fifth resource overlaps with the non-active time of the discontinuous transmission, determines not to send the fourth uplink channel to a network apparatus; and when the fifth time domain resource further overlaps with a time domain resource occupied by a first reference signal, determines to send the first reference signal to the network apparatus.

For example, the discontinuous transmission may be cell discontinuous reception (cell discontinuous reception, Cell DRX).

Optionally, the first reference signal may be a sounding reference signal.

In a possible implementation, the first reference signal is an uplink signal that is allowed to be sent by the terminal apparatus within the non-active time of the discontinuous transmission.

In a possible implementation, the terminal apparatus may further receive fourth indication information from the network apparatus, where the fourth indication information indicates a configuration of enhanced uplink skip; determine that the plurality of to-be-sent uplink signals include no uplink data; and determine not to send the fourth uplink channel to the network apparatus.

According to a third aspect, this application provides another communication method. The method may be performed by a network apparatus, or may be performed by a component in the network apparatus. This is not limited. In the method, the network apparatus receives a plurality of uplink signals from a terminal apparatus, where the plurality of uplink signals include an uplink signal that is not allowed to be sent by the terminal apparatus within a non-active time of discontinuous transmission, the plurality of uplink signals are multiplexed in a first uplink channel, and a first time domain resource used to send the first uplink channel overlaps with the non-active time of the discontinuous transmission.

For example, the discontinuous transmission may be cell discontinuous reception Cell DRX.

In a possible implementation, the plurality of to-be-sent uplink signals include a first hybrid automatic repeat request acknowledgement HARQ ACK signal.

A priority of the first HARQ ACK signal is higher than a priority of a second uplink signal, and the second uplink signal is an uplink signal other than the first HARQ ACK signal in the plurality of to-be-sent uplink signals; or a priority of the first HARQ ACK signal is higher than a priority of the first uplink channel, and the first uplink channel is an uplink channel that is not allowed to be sent by the terminal apparatus within the non-active time of the discontinuous transmission; or a priority of the first HARQ ACK signal is a high priority.

In a possible implementation, the network apparatus may further send fourth indication information to the terminal apparatus, where the fourth indication information indicates a configuration of enhanced uplink skip, and the plurality of to-be-sent uplink signals include uplink data and a control signal that is not allowed to be sent by the terminal apparatus within the non-active time of the discontinuous transmission.

In a possible implementation, the first time domain resource further overlaps with a time domain resource occupied by a first reference signal, and the plurality of to-be-sent uplink signals include a HARQ ACK signal, or the plurality of to-be-sent uplink signals include a scheduling request, or the first uplink channel is a dynamically scheduled data channel, or the first uplink channel is a configured grant data channel.

According to a fourth aspect, this application provides another communication method. The method may be performed by a network apparatus, or may be performed by a component in the network apparatus. This is not limited. In the method, the network apparatus receives a plurality of control signals and at least one piece of uplink data from a terminal apparatus, where the plurality of control signals include an uplink signal that is not allowed to be sent by the terminal apparatus within a non-active time of discontinuous transmission, the plurality of control signals and the at least one piece of uplink data are multiplexed in a second uplink channel, the second uplink channel is an uplink channel configured for the at least one piece of uplink data, a second time domain resource used to send the second uplink channel overlaps with the non-active time of the discontinuous transmission, the second time domain resource further overlaps with a first time domain resource, the first time domain resource is used to send a first uplink channel, the first uplink channel is an uplink channel in which the plurality of control signals are multiplexed when the terminal apparatus sends only the plurality of control signals to the network apparatus, and the first time domain resource overlaps with the non-active time of the discontinuous transmission.

For example, the discontinuous transmission may be cell discontinuous reception Cell DRX.

In a possible implementation, the at least one piece of uplink data is data that is allowed to be sent by the terminal apparatus within the non-active time of the discontinuous transmission.

In a possible implementation, the plurality of to-be-sent uplink signals include a first hybrid automatic repeat request acknowledgement HARQ ACK signal, a priority of the first HARQ ACK signal is higher than a priority of the first uplink channel, and the first uplink channel is an uplink channel that is not allowed to be sent by the terminal apparatus within the non-active time of the discontinuous transmission. Alternatively, a priority of the first HARQ ACK signal is a high priority.

In a possible implementation, the network apparatus may further send fourth indication information to the terminal apparatus, where the fourth indication information indicates a configuration of enhanced uplink skip, and the plurality of to-be-sent uplink signals include a control signal that is not allowed to be sent by the terminal apparatus within the non-active time of the discontinuous transmission and uplink data.

In a possible implementation, the first time domain resource further overlaps with a time domain resource occupied by a first reference signal, and the first uplink channel is a dynamically scheduled data channel, or the first uplink channel is a configured grant data channel.

Based on the third aspect or the fourth aspect, in a possible implementation, the plurality of to-be-sent uplink signals include an uplink signal that is allowed to be sent by the terminal apparatus within the non-active time of the discontinuous transmission; or the first uplink channel is an uplink channel that is allowed to be sent by the terminal apparatus within the non-active time of the discontinuous transmission; or the plurality of to-be-sent uplink signals include an uplink signal that is allowed to be sent by the terminal apparatus within the non-active time of the discontinuous transmission, and the first uplink channel is an uplink channel that is allowed to be sent by the terminal apparatus within the non-active time of the discontinuous transmission.

Based on the third aspect or the fourth aspect, in a possible implementation, the plurality of control signals include a first uplink signal, where the first uplink channel is a control channel, and the first uplink signal is an uplink signal that is allowed to be sent by the terminal apparatus within the non-active time of the discontinuous transmission; or the plurality of control signals include a HARQ ACK signal, and the first uplink signal is an uplink signal that is allowed to be sent by the terminal apparatus within the non-active time of the discontinuous transmission; or the plurality of control signals include no HARQ ACK signal, and the first uplink channel is an uplink channel that is allowed to be sent by the terminal apparatus within the non-active time of the discontinuous transmission.

Based on the third aspect or the fourth aspect, in a possible implementation, the network apparatus may further send first indication information to the terminal apparatus, where the first indication information indicates a configuration of the discontinuous transmission, and the configuration of the discontinuous transmission is used to determine an active time of the discontinuous transmission.

According to a fifth aspect, this application provides another communication method. The method may be performed by a network apparatus, or may be performed by a component in the network apparatus. This is not limited. In the method, the network apparatus receives a first reference signal from a terminal apparatus, where a time domain resource occupied by the first reference signal overlaps with a fifth time domain resource used to send a fourth uplink channel, the fifth resource overlaps with a non-active time of discontinuous transmission, the fourth uplink channel is used to carry channel state information, or the fourth uplink channel is used to carry layer 1 reference signal received power, or the fourth uplink channel is an uplink channel in which a plurality of uplink signals are multiplexed, and an uplink signal carried on the fourth uplink channel includes an uplink signal that is not allowed to be sent by the terminal apparatus within the non-active time of the discontinuous transmission.

For example, the discontinuous transmission may be cell discontinuous reception Cell DRX.

Optionally, the first reference signal may be a sounding reference signal.

In a possible implementation, the first reference signal is an uplink signal that is allowed to be sent by the terminal apparatus within the non-active time of the discontinuous transmission.

In a possible implementation, the network apparatus may further send fourth indication information to the terminal apparatus, where the fourth indication information indicates a configuration of enhanced uplink skip, the plurality of to-be-sent uplink signals include a control signal that is not allowed to be sent by the terminal apparatus within the non-active time of the discontinuous transmission, and the plurality of to-be-sent uplink signals include no uplink data.

According to a sixth aspect, this application provides a communication apparatus. The communication apparatus is configured to perform the method according to any one of the first aspect or the second aspect and the possible implementations of the first aspect or the second aspect. The communication apparatus is, for example, a terminal apparatus, or a functional module in the terminal apparatus, for example, a baseband apparatus or a chip system.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a seventh aspect, this application provides a communication apparatus. The communication apparatus is configured to perform the method according to any one of the third aspect to the fifth aspect and the possible implementations of the third aspect to the fifth aspect. The communication apparatus is, for example, a network apparatus, or a functional module in the network apparatus, for example, a baseband apparatus or a chip system.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to an eighth aspect, this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the first aspect to the fifth aspect and the possible implementations of the first aspect to the fifth aspect.

According to a ninth aspect, this application further provides a communication apparatus. The communication apparatus includes a processor and an interface circuit. The interface circuit is configured to receive a signal from another communication apparatus and transmit the signal to the processor, or send a signal from the processor to another communication apparatus. The processor is configured to implement the method according to any one of the first aspect to the fifth aspect and the possible implementations of the first aspect to the fifth aspect by using a logic circuit or by executing code instructions.

According to a tenth aspect, this application further provides a communication system. The communication system includes one or two of the following: the communication apparatus according to the sixth aspect or the communication apparatus according to the seventh aspect.

According to an eleventh aspect, an embodiment of this application provides a computer-readable storage medium. The storage medium stores a computer program or instructions, and when the computer program or the instructions are executed by a communication apparatus, the method according to any one of the first aspect to the fifth aspect and the possible implementations of the first aspect to the fifth aspect is implemented.

According to a twelfth aspect, this application further provides a computer program product. The computer program product includes a computer program, and when the computer program is run on a computer, the computer is enabled to perform the method according to any one of the first aspect to the fifth aspect and the possible implementations of the first aspect to the fifth aspect.

According to a thirteenth aspect, this application further provides a chip. The chip is coupled to a memory, and is configured to read and execute program instructions in the memory, so that an apparatus in which the chip is located implements the method according to any one of the first aspect to the fifth aspect and the possible implementations of the first aspect to the fifth aspect.

For technical effects that can be achieved in any one of the second aspect to the thirteenth aspect and the possible implementations of the second aspect to the thirteenth aspect, correspondingly refer to the technical effects that can be achieved in any one of the first aspect and the possible implementations of the first aspect. Details are not described again.

### BRIEF DESCRIPTION OF DRAWINGS

FIG. 1 is a diagram of a structure of a communication system;
FIG. 2 is a diagram of an active time and a non-active time of cell DRX;
FIG. 3 is a schematic flowchart of a communication method according to an embodiment of this application;
FIG. 4 is a diagram of processing a plurality of to-be-sent uplink signals according to an embodiment of this application;
FIG. 5 is another diagram of processing a plurality of to-be-sent uplink signals according to an embodiment of this application;
FIG. 6 is another diagram of processing a plurality of to-be-sent uplink signals according to an embodiment of this application;
FIG. 7 is a schematic flowchart of another communication method according to an embodiment of this application;
FIG. 8 is a diagram of processing a plurality of to-be-sent control signals and at least one piece of to-be-sent uplink data according to an embodiment of this application;
FIG. 9 is a schematic flowchart of another communication method according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is another diagram of processing a plurality of to-be-sent uplink signals according to an embodiment of this application;
FIG. 13 is another diagram of processing a plurality of to-be-sent uplink signals according to an embodiment of this application; and
FIG. 14 is a schematic flowchart of another communication method according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more. For example, including at least one of A, B, and C means that A, B, C, A and B, A and C, B and C, or A, B, and C may be included. "And/or" describes an association relationship between associated objects and three relationships may specifically exist. For example, A and/or B may represent the following three cases: Only A exists, both A and B exist, and only B exists. In addition, the character "/" generally indicates an "or" relationship between the associated objects, unless otherwise specified.

In addition, the terms "system" and "network" in embodiments of this application may be used interchangeably, and "according to" and "based on" may be used interchangeably.

Ordinal numerals such as "first" and "second" in embodiments of this application are usually for distinguishing between different objects, and are not for limiting a sequence, a time sequence, priorities, importance degrees, or the like of a plurality of objects. For example, the first uplink channel and the second uplink channel in embodiments of this application are for distinguishing between two uplink channels, and are not for limiting priorities, importance degrees, or the like of the two uplink channels.

Embodiments of this application are presented with respect to a system including a plurality of devices, components, modules, or the like. It should be understood that the system may include other devices, components, modules, or the like that are not mentioned, or may include only a part of devices, components, modules, or the like that are mentioned in embodiments.

The following first describes a communication system to which embodiments of this application are applicable.

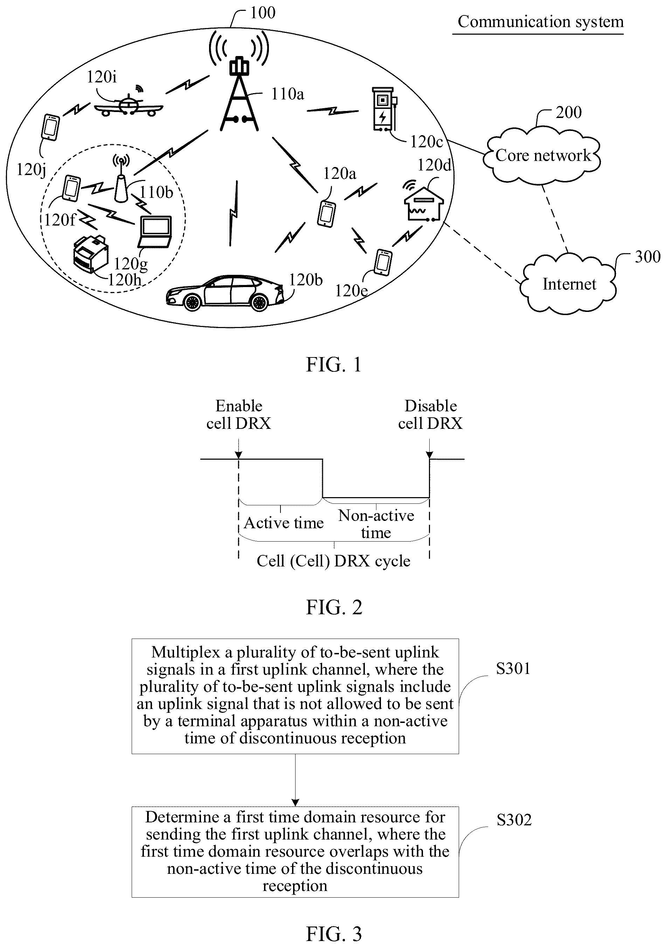

The network architecture and the application scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new application scenarios, the technical solutions provided in embodiments of this application are also applicable to similar technical problems. In embodiments of this application, a communication system shown in FIG. 1 is used as an example for description. When the technical solutions in embodiments of this application are applied to another communication system, the devices, components, modules, or the like in embodiments may be replaced with corresponding devices, components, or modules in the another communication system. This is not limited.

FIG. 1 is a diagram of an architecture of a communication system to which an embodiment of this application is applied. As shown in FIG. 1, the communication system includes a radio access network 100 and a core network 200. Optionally, the communication system may further include an internet 300. The radio access network (radio access network, RAN) 100 may include at least one RAN node (for example, 110a and 110b in FIG. 1, which are collectively referred to as 110), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for connection between terminals and between radio access network devices. FIG. 1 is merely an example diagram. The communication system may further include other network devices, for example, may further include a wireless relay device and a wireless backhaul device, which are not shown in FIG. 1.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system obtained by combining two or more of the foregoing systems.

The RAN node 110 may also be referred to as a network apparatus, an access network device, a RAN entity, an access node, or the like sometimes, and constitutes a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or some functions of the RAN node.

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

The terminal is a device having wireless sending and receiving functions, and may send a signal to a base station, or receive a signal from a base station. The terminal may also be referred to as a terminal device, a terminal apparatus, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with wireless sending and receiving functions, a wearable device, a vehicle, an airplane, a ship, a robot, a robot arm, a smart home device, or the like. Neither of a specific technology and a specific device form used for the terminal is limited in embodiments of this application.

The base station and the terminal may be fixed or movable. The base station and the terminal may be deployed on land, including an indoor or outdoor device, a handheld device, or a vehicle-mounted device; or may be deployed on a water surface; or may be deployed on a plane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a function of a base station, and 120a to 120j in FIG. 1 may be referred to as communication apparatuses having a function of a terminal.

Communication may be performed between a base station and a terminal, between base stations, or between terminals by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios such as smart grid, industrial control, smart transportation, and smart city. The function of the terminal may alternatively be performed by a module (for example, a chip or a modem) in the terminal, or may be performed by an apparatus including the function of the terminal.

In embodiments of this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered by a signal from a neighboring cell.

It may be understood that, in embodiments of this application, a physical downlink control channel (physical downlink control channel, PDCCH), a physical downlink shared channel (physical downlink shared channel, PDSCH), a PUCCH, and a PUSCH are merely used as examples of a downlink control channel, a downlink data channel, an uplink control channel, and an uplink data channel respectively. In different systems and different scenarios, a control channel and a data channel may have different names. This is not limited in embodiments of this application.

Embodiments of this application provide a communication method and apparatus, to process a plurality of to-be-sent uplink signals when a plurality of uplink channels configured for the plurality of to-be-sent uplink signals overlap in time domain within a non-active time of discontinuous transmission and the plurality of to-be-sent uplink signals include an uplink signal that is not allowed to be sent by a terminal apparatus within the non-active time of discontinuous transmission. The method and the apparatus in this application are based on a same technical concept. Because the method and the apparatus have similar principles for resolving a problem, mutual reference may be made between implementations of the apparatus and the method. Repeated parts are not described in detail again.

The following first describes some technical terms in embodiments of this application.

### 1. Discontinuous transmission

The discontinuous transmission includes a non-active time and an active time. Specifically, a network apparatus may receive, within the active time of the discontinuous transmission, an uplink signal sent by a terminal apparatus, that is, the terminal apparatus is allowed to send the uplink signal to the network apparatus within the active time of the discontinuous transmission. The network apparatus may not receive some uplink signals and/or some uplink channels within the non-active time of the discontinuous transmission, that is, the terminal apparatus is not allowed to send these uplink signals and/or these uplink channels within the non-active time of the discontinuous transmission.

Optionally, to reduce power consumption of the network apparatus, the network apparatus may configure discontinuous transmission by using a cell as a granularity, that is, a configuration of discontinuous transmission in one cell is the same for a plurality of terminal apparatuses in the cell. In other words, a configuration of discontinuous transmission in one cell is shared by a plurality of terminal apparatuses in the cell. Configurations of discontinuous transmission in different cells may be the same or may be different. This is not limited. In view of this, the discontinuous transmission in embodiments of this application may also be referred to as cell discontinuous reception (cell discontinuous reception, Cell DRX). The following uses an example in which the discontinuous transmission is cell DRX for description. In other words, the cell DRX in the following may be replaced with discontinuous transmission.

Correspondingly, that the network apparatus may receive, within the active time of the discontinuous transmission, the uplink signal sent by the terminal apparatus, that is, the terminal apparatus is allowed to send the uplink signal to the network apparatus within the active time of the discontinuous transmission may be replaced with the following: The network apparatus may receive, within an active time of the cell DRX, an uplink signal sent by the terminal apparatus, that is, the terminal apparatus is allowed to send the uplink signal to the network apparatus within the active time of the cell DRX. That the network apparatus may not receive some uplink signals and/or some uplink channels within the non-active time of the discontinuous transmission, that is, the terminal apparatus is not allowed to send these uplink signals and/or these uplink channels within the non-active time of the discontinuous transmission may be replaced with the following: The network apparatus may not receive some uplink signals and/or some uplink channels within a non-active time of the cell DRX cell discontinuous reception, that is, the terminal apparatus is not allowed to send these uplink signals and/or these uplink channels within the non-active time of the cell DRX.

### 2. Configuration of cell DRX

The configuration of the cell DRX may be used to determine a non-active time of the cell DRX, or used to determine an active time of the cell DRX, or used to determine a non-active time and an active time of the cell DRX. For example, the configuration of the cell DRX may include but is not limited to a cell DRX cycle, a start location of the active time, a length of the active time, a start location of the non-active time, a length of the non-active time, or the like. For example, a network apparatus may send first indication information to a terminal apparatus. Correspondingly, the terminal apparatus receives the first indication information from the network apparatus. Further, the terminal apparatus may start (or perform) cell DRX based on the first indication information. The first indication information may be the configuration of the cell DRX, or may indicate the configuration of the cell DRX. The first indication information may be carried in radio resource control (radio resource control, RRC) signaling, or may be carried in downlink control information (downlink control information, DCI), or may be carried in media access control control element (media access control control element, MAC CE) signaling, or the first indication information includes RRC signaling and DCI, or the first indication information includes RRC signaling and MAC CE signaling. This is not limited.

In an example, the network apparatus sends a configuration of cell DRX to the terminal apparatus. Correspondingly, the terminal apparatus receives the configuration of the cell DRX from the network apparatus, and starts cell DRX based on the configuration of the cell DRX. In another example, the network apparatus sends one or more configurations of cell DRX to the terminal apparatus. Correspondingly, the terminal apparatus receives the one or more configurations of the cell DRX from the network apparatus. Further, the network apparatus sends first indication information to the terminal apparatus, where the first indication information may indicate one configuration of cell DRX in the one or more configurations of the cell DRX. Correspondingly, the terminal apparatus receives the first indication information from the network apparatus, and starts cell DRX based on the configuration of the cell DRX indicated by the first indication information.

Optionally, the terminal apparatus may send capability information to the network apparatus, where the capability information indicates that the terminal apparatus supports cell DRX. The network apparatus receives the capability information from the terminal apparatus, and sends the one or more configurations of the cell DRX to the terminal apparatus based on the capability information.

It should be noted that the terminal apparatus may start cell DRX based on information included in the configuration of the cell DRX. In another possible implementation, the network apparatus may send second indication information to the terminal apparatus, where the second indication information is used to enable cell DRX (in other words, to indicate that the configuration of the cell DRX takes effect). Correspondingly, the terminal apparatus receives the second indication information from the network apparatus, and starts cell DRX based on the second indication information. Optionally, the network apparatus may send third indication information to the terminal apparatus, where the third indication information is used to disable cell DRX (in other words, to indicate that the configuration of the cell DRX is invalid). Correspondingly, the terminal apparatus receives the third indication information from the network apparatus, and stops cell DRX based on the third indication information, as shown in FIG. 2. The second indication information may be carried in RRC signaling, DCI, MAC CE signaling, or the like. This is not limited. The third indication information may be carried in RRC signaling, DCI, MAC CE signaling, or the like. This is not limited.

### 3. Uplink signal or uplink channel that is not allowed or allowed to be sent by a terminal apparatus within a non-active time of cell DRX

The uplink signal that is not allowed to be sent by the terminal apparatus within the non-active time of the cell DRX may include but is not limited to: periodically scheduled or semi-persistently scheduled CSI, a periodic SRS (periodic SRS, P-SRS), a semi-persistent SRS (semi-persistent SRS, SP-SRS), an SR, uplink data sent by using a configured grant (configured grant, CG) PUSCH, layer 1 (layer 1, L1)-reference signal received power (reference signal received power, RSRP), or the like.

The uplink channel that is not allowed to be sent by the terminal apparatus within the non-active time of the cell DRX may include but is not limited to: a PUCCH configured by using higher layer signaling or a configured grant PUSCH.

The uplink signal that is allowed to be sent by the terminal apparatus within the non-active time of the cell DRX may include but is not limited to: dynamically scheduled (also referred to as dynamic grant (dynamic grant, DG)) uplink data, a hybrid automatic repeat request acknowledgement (hybrid automatic repeat request acknowledgement, HARQ ACK) signal corresponding to a dynamically scheduled PDCCH, a HARQ ACK signal corresponding to a dynamically scheduled PDSCH, or an aperiodic SRS (aperiodic SRS, A-SRS). The HARQ ACK signal corresponding to the dynamically scheduled PDCCH may be understood as a HARQ ACK signal fed back for the dynamically scheduled PDCCH. The HARQ ACK signal corresponding to the dynamically scheduled PDSCH may be understood as a HARQ ACK signal fed back for the dynamically scheduled PDSCH. It should be understood that the HARQ ACK signal may include an ACK signal and a negative acknowledgement (negative acknowledgement, NACK) signal.

The uplink channel that is allowed to be sent by the terminal apparatus within the non-active time of the cell DRX may include but is not limited to: a dynamically scheduled PUCCH or a dynamically scheduled PUSCH. The dynamically scheduled PUCCH may be understood as that a resource corresponding to (or occupied by) the PUCCH is sent to the terminal apparatus by using dynamic signaling. The dynamically scheduled PUSCH may be understood as that a resource corresponding to (or occupied by) the PUSCH is sent to the terminal apparatus by using dynamic signaling.

The dynamic scheduling in embodiments of this application may be understood as scheduling performed by using DCI, but is not limited thereto.

### 4. Priority

Priorities of uplink transmission (for example, a PUCCH or a PUSCH) include a priority 0 and a priority 1. The priority 0 represents a low priority (low priority, LP), and the priority 1 represents a high priority (high priority, HP), that is, a priority of uplink transmission corresponding to the priority 0 is lower than a priority of uplink transmission corresponding to the priority 1. If uplink channels with different priorities overlap in time domain, either of the following manners may be used for processing.

### Manner 1: High-priority uplink transmission cancels low-priority uplink transmission.

If transmission of uplink channels with different priorities overlaps in time domain, transmission of a low-priority uplink channel is canceled (or discarded). For example, if an HP PUCCH and an LP PUSCH overlap in time domain, sending of the LP PUSCH is canceled. In manner 1, on a basis that transmission of the low-priority uplink channel has been scheduled, a high-priority uplink channel is allowed to preempt a resource of the low-priority uplink channel, to ensure transmission of the high-priority uplink channel.

### Manner 2: High-priority uplink transmission and low-priority uplink transmission are multiplexed and then transmitted together.

If transmission of uplink channels with different priorities overlaps in time domain, some uplink channel combinations with different priorities may be multiplexed according to a preset rule, and then transmitted together after multiplexing. For example, if an HP HARQ ACK signal and an LP HARQ ACK signal overlap in time domain, the HP HARQ ACK signal and the LP HARQ ACK signal may be multiplexed in one PUCCH for sending. For another example, if an LP HARQ ACK signal and an HP PUSCH overlap in time domain, the LP HARQ ACK signal may be multiplexed in the HP PUSCH for sending. For another example, if an HP HARQ ACK signal and an LP PUSCH overlap in time domain, the HP HARQ ACK signal may be multiplexed in the LP PUSCH for sending. In manner 2, impact of high-priority transmission on low-priority transmission can be reduced, so that sending of some relatively important low-priority uplink transmissions (for example, an LP HARQ ACK signal or an LP PUSCH) may not be canceled.

### 5. Uplink (uplink, UL) skip (skip)

The UL skip may refer to skip for PUSCH transmission that has been scheduled by a network apparatus. Specifically, if a terminal apparatus does not need to send uplink data, the terminal apparatus may ignore scheduling of the network apparatus, and does not perform PUSCH transmission, that is, skip uplink transmission. Currently, a communication protocol supports two UL skip mechanisms: basic UL skip and enhanced UL skip. The basic UL skip means that a case in which a PUSCH and a PUCCH overlap in time domain is not considered, and PUSCH transmission can be skipped provided that the terminal apparatus has no uplink data. The enhanced UL skip means: If a PUSCH and a PUCCH overlap in time domain, and the terminal apparatus has no uplink data, the terminal apparatus needs to send a padding packet on the PUSCH, and multiplex UCI originally carried on the PUCCH in the PUSCH, for sending together with the padding packet. If a PUSCH and a PUCCH do not overlap in time domain, and the terminal apparatus has no uplink data, the terminal apparatus may skip PUSCH transmission.

### 6. Sounding reference signal (sounding reference signal, SRS)

The SRS may be used to determine a channel status of an uplink channel. In other words, a network apparatus may determine a channel condition of an uplink channel by using an SRS sent by a terminal apparatus. The SRS may include a periodic SRS (periodic SRS, P-SRS), a semi-persistent SRS (semi-persistent SRS, SP-SRS), and an aperiodic SRS (aperiodic SRS, A-SRS).

For an SRS and a PUCCH overlapping in time domain, it is stipulated in a current protocol as follows: If the PUCCH carries only CSI or layer 1 (layer 1, L1)-reference signal received power (reference signal received power, RSRP), and the PUCCH overlaps with a P-SRS in time domain, the P-SRS is discarded; if the PUCCH carries only CSI or L1-RSRP, and the PUCCH overlaps with an SP-SRS in time domain, the SP-SRS is discarded; if the PUCCH carries only CSI or L1-RSRP, and the PUCCH overlaps with an A-SRS in time domain, the PUCCH is discarded; if the PUCCH carries a HARQ ACK signal or a scheduling request (scheduling request, SR), and the PUCCH overlaps with a P-SRS in time domain, the P-SRS is discarded; if the PUCCH carries a HARQ ACK signal or an SR, and the PUCCH overlaps with an SP-SRS in time domain, the SP-SRS is discarded; or if the PUCCH carries a HARQ ACK signal or an SR, and the PUCCH overlaps with an A-SRS in time domain, the A-SRS is discarded, as shown in Table 1.

**Table 1**

| | P-SRS | SP-SRS | A-SRS |
|---|---|---|---|
| A PUCCH carries only CSI or L1-RSRP | The P-SRS is discarded | The SP-SRS is discarded | The PUCCH is discarded |
| A PUCCH carries a HARQ ACK signal or an SR | The P-SRS is discarded | The SP-SRS is discarded | The A-SRS is discarded |

For an SRS and a PUSCH overlapping in time domain, it is stipulated in a current protocol as follows: If the PUSCH is an LP PUSCH, the PUSCH and the SRS are not allowed to be configured or scheduled on a same symbol; or if the PUSCH is an HP PUSCH, and the PUSCH overlaps with the SRS in time domain, the SRS is discarded, as shown in Table 2.

**Table 2**

| | SRS |
|---|---|
| LP PUSCH | Not allowed to be configured or scheduled on a same symbol |
| HP PUSCH | The SRS is discarded |

In addition, the resource in embodiments of this application includes a time domain resource and/or a frequency domain resource. The time domain resource may include a symbol (symbol), a slot (slot), a mini-slot (mini-slot), a partial slot (partial slot), a sub-frame (sub-frame), a radio frame (frame), a sensing slot (sensing slot), or the like. This is not limited. The frequency domain resource may include a resource element (resource element, RE), a resource block (resource block, RB), an RB set (RB set), a subchannel (subchannel), a resource pool (resource pool), a bandwidth part (bandwidth part, BWP), a carrier (carrier), a channel (channel), an interlace (interlace), or the like. This is not limited.

The following describes a communication method provided in embodiments of this application.

FIG. 3 is a schematic flowchart of a communication method according to an embodiment of this application. The method may be applied to the communication system shown in FIG. 1. This is not limited. For example, a terminal apparatus may be the terminal apparatus in the communication system shown in FIG. 1, or may be a component of the terminal apparatus in the communication system shown in FIG. 1. This is not limited. As shown in FIG. 3, the method may include the following content.

S301: The terminal apparatus multiplexes a plurality of to-be-sent uplink signals in a first uplink channel.

The plurality of to-be-sent uplink signals may all be control signals, or may include a control signal and data. The control signal may include but is not limited to: channel state information (channel state information, CSI), a sounding reference signal (sounding reference signal, SRS), a scheduling request (scheduling request, SR), a HARQ ACK signal, or the like.

In this embodiment of this application, a plurality of uplink channels configured for the plurality of to-be-sent uplink signals overlap in time domain, and a time domain resource of the overlapping (for example, denoted as a third time domain resource) completely or partially overlaps with a non-active time of discontinuous transmission (that is, cell DRX). For example, a network apparatus may schedule uplink transmission of the terminal apparatus, and configure the plurality of uplink channels for the plurality of to-be-sent uplink signals. Further, the terminal apparatus may determine that the plurality of uplink channels configured for the plurality of to-be-sent uplink signals overlap on the third time domain resource, and the third time domain resource overlaps with the non-active time of the cell DRX. The term "configured" may be replaced with "multiplexed". The configured uplink channel may be understood as an uplink channel originally configured (or scheduled) by the network apparatus.

Alternatively, the plurality of to-be-sent uplink signals include a plurality of control signals and at least one piece of uplink data, a plurality of uplink channels configured for the plurality of control signals overlap in time domain (for example, a time domain resource of the overlapping is denoted as a fourth time domain resource), and the fourth time domain resource completely or partially overlaps with a non-active time of discontinuous transmission (that is, cell DRX). An uplink channel in which the plurality of control signals are multiplexed and an uplink channel configured for the at least one piece of data overlap in time domain (for example, a time domain resource of the overlapping is denoted as a fifth time domain resource), and the fifth time domain resource completely or partially overlaps with the non-active time of the discontinuous transmission (that is, the cell DRX). For example, the network apparatus may schedule uplink transmission of the terminal apparatus, and configure a plurality of uplink channels for the plurality of control signals and the at least one piece of uplink data in the plurality of to-be-sent uplink signals. The terminal apparatus may determine that the plurality of uplink channels configured for the plurality of control signals overlap on the fourth time domain resource, and the fourth time domain resource overlaps with the non-active time of the cell DRX. Further, the terminal apparatus may multiplex the plurality of control signals in one uplink channel, and determine that the one uplink channel and the uplink channel configured for the at least one piece of uplink data overlap on the fifth time domain resource, and the fifth time domain resource overlaps with the non-active time of the cell DRX.

It should be understood that, for the plurality of to-be-sent uplink signals, the network apparatus may perform scheduling once, or may perform scheduling for a plurality of times. A specific implementation process in which the network apparatus schedules uplink transmission of the terminal apparatus is not limited in this embodiment of this application.

The plurality of to-be-sent uplink signals each may be an uplink signal that is allowed to be sent by the terminal apparatus within the non-active time of the cell DRX, or each may be an uplink signal that is not allowed to be sent by the terminal apparatus within the non-active time of the cell DRX, or may include an uplink signal that is allowed to be sent by the terminal apparatus within the non-active time of the cell DRX and an uplink signal that is not allowed to be sent by the terminal apparatus within the non-active time of the cell DRX. Unless otherwise specified, in this embodiment of this application, an example in which the plurality of to-be-sent uplink signals include an uplink signal that is not allowed to be sent by the terminal apparatus within the non-active time of the cell DRX is used for description.

The first uplink channel may be a control channel such as a PUCCH, or may be a data channel such as a PUSCH. This is not limited. The first uplink channel may be an uplink channel that is allowed to be sent by the terminal apparatus within the non-active time of the cell DRX, or may be an uplink channel that is not allowed to be sent by the terminal apparatus within the non-active time of the cell DRX. Multiplexing the plurality of to-be-sent uplink signals in the first uplink channel may be understood as that the plurality of to-be-sent uplink signals are carried on the first uplink channel, or may be understood as that the plurality of to-be-sent uplink signals are mapped to the first uplink channel. This is not limited.

S302: The terminal apparatus determines a first time domain resource for sending the first uplink channel.

For example, the terminal apparatus may determine a resource for sending the first uplink channel. The resource includes a time domain resource and/or a frequency domain resource. In this embodiment of this application, an example in which the terminal apparatus determines a time domain resource (for example, denoted as the first time domain resource) for sending the first uplink channel is used for description. The first time domain resource completely or partially overlaps with the non-active time of the cell DRX. That the terminal apparatus determines the first time domain resource for sending the first uplink channel may be understood as that the terminal apparatus allocates the first time domain resource to the first uplink channel, or may be understood as that the terminal apparatus determines a time domain resource corresponding to the first uplink channel. This is not limited. In addition, sending the first uplink channel may be understood as sending the plurality of to-be-sent uplink signals, and the plurality of to-be-sent uplink signals are carried on the first uplink channel.

In this embodiment of this application, the plurality of uplink channels configured for the plurality of to-be-sent uplink signals overlap on the third time domain resource, and the third time domain resource overlaps with the non-active time of the cell DRX. Alternatively, the plurality of uplink channels configured for the plurality of control signals in the plurality of to-be-sent uplink signals overlap on the fourth time domain resource, the one uplink channel in which the plurality of control signals are multiplexed and the uplink channel configured for the at least one piece of uplink data in the plurality of to-be-sent uplink signals overlap on the fifth time domain resource, and both the fourth time domain resource and the fifth time domain resource overlap with the non-active time of the cell DRX. Therefore, this embodiment of this application provides four criteria (for example, denoted as a criterion 1, a criterion 2, a criterion 3, and a criterion 4), and the terminal apparatus may determine a processing manner (for example, whether to send and a multiplexing manner) of the plurality of to-be-sent uplink signals based on one or more of the criterion 1, the criterion 2, the criterion 3, or the criterion 4.

Criterion 1: If the plurality of to-be-sent uplink signals include an uplink signal that is allowed to be sent by the terminal apparatus within the non-active time of the cell DRX, the plurality of to-be-sent uplink signals are sent. Correspondingly, if the plurality of to-be-sent uplink signals each are an uplink signal that is not allowed to be sent by the terminal apparatus within the non-active time of the cell DRX, the plurality of to-be-sent uplink signals are not sent.

Criterion 2: If the uplink channel in which the plurality of to-be-sent uplink signals are multiplexed is an uplink channel that is allowed to be sent by the terminal apparatus within the non-active time of the cell DRX, the plurality of to-be-sent uplink signals are sent. Correspondingly, if the uplink channel in which the plurality of to-be-sent uplink signals are multiplexed is an uplink channel that is not allowed to be sent by the terminal apparatus within the non-active time of the cell DRX, the plurality of to-be-sent uplink signals are not sent.

Criterion 3: An uplink signal that is in the plurality of to-be-sent uplink signals and that is allowed to be sent by the terminal apparatus within the non-active time of the cell DRX is sent. Correspondingly, an uplink signal that is in the plurality of to-be-sent uplink signals and that is not allowed to be sent by the terminal apparatus within the non-active time of the cell DRX is not sent.

Criterion 4: If enhanced UL skip is configured, and the plurality of to-be-sent uplink signals include uplink data, the plurality of to-be-sent uplink signals are sent. Correspondingly, if UL skip is configured, and the plurality of to-be-sent uplink signals include no uplink data, the plurality of to-be-sent uplink signals are not sent.

It should be noted that one or more of the criterion 1, the criterion 2, the criterion 3, or the criterion 4 may be predefined, or may be configured by the network apparatus. This is not limited.

The foregoing four criteria may be separately and independently used, or three or more of the criteria may be used in combination. This is not limited. When the four criteria are independently used, the terminal apparatus may fixedly use one of the criteria, or may use one of the criteria according to a preset rule, or may determine, according to an indication of the network apparatus, to use one of the criteria, or may determine, based on a type of the to-be-sent uplink signal or a type of a multiplexed uplink signal, to use one of the criteria. This is not limited.

For example, if the first uplink channel is a control channel, the terminal apparatus determines the processing manner of the plurality of to-be-sent uplink signals by using the criterion 1. For example, the plurality of to-be-sent uplink signals include a first uplink signal. If the first uplink channel is a control channel, the terminal apparatus may determine that the first uplink signal is an uplink signal that is allowed to be sent by the terminal apparatus within the non-active time of the cell DRX, and determine to send the plurality of to-be-sent uplink signals to the network apparatus.

Alternatively, if the first uplink channel is a data channel, the terminal apparatus determines the processing manner of the plurality of to-be-sent uplink signals by using the criterion 2. For example, if the first uplink channel is a data channel, the terminal apparatus determines that the first uplink channel is an uplink channel that is allowed to be sent by the terminal apparatus within the non-active time of the cell DRX, and determines to send the plurality of to-be-sent uplink signals to the network apparatus.

Alternatively, if the plurality of to-be-sent uplink signals include a HARQ ACK signal, the terminal apparatus determines the processing manner of the plurality of to-be-sent uplink signals by using the criterion 1. For example, the plurality of to-be-sent uplink signals include a first uplink signal. If the plurality of to-be-sent uplink signals include a HARQ ACK signal, the terminal apparatus may determine that the first uplink signal is an uplink signal that is allowed to be sent by the terminal apparatus within the non-active time of the cell DRX, and determine to send the plurality of to-be-sent uplink signals to the network apparatus.

Alternatively, if the plurality of to-be-sent uplink signals include no HARQ ACK signal, the terminal apparatus determines the processing manner of the plurality of to-be-sent uplink signals by using the criterion 2. For example, if the plurality of to-be-sent uplink signals include no HARQ ACK signal, the terminal apparatus may determine that the first uplink channel is an uplink channel that is allowed to be sent by the terminal apparatus within the non-active time of the cell DRX, and determine to send the plurality of to-be-sent uplink signals to the network apparatus.

Alternatively, if enhanced UL skip is configured, and the first uplink channel is a first data channel, the terminal apparatus determines the processing manner of the plurality of to-be-sent uplink signals by using the criterion 4. Optionally, the first data channel may be an uplink channel that is allowed to be sent by the terminal apparatus within the non-active time of the discontinuous transmission. For example, the first data channel is a dynamically scheduled PUSCH. This is not limited.

The following describes an implementation process of S301 and S302 with reference to the criterion 1, the criterion 2, the criterion 3, and the criterion 4.

In a possible implementation, before S301, the terminal apparatus may determine the processing manner of the plurality of to-be-sent uplink signals according to the criterion 1. For example, the plurality of to-be-sent uplink signals include a first uplink signal. Before the plurality of to-be-sent uplink signals are multiplexed in the first uplink channel, the terminal apparatus may determine that the first uplink signal is an uplink signal that is allowed to be sent by the terminal apparatus within the non-active time of the cell DRX. Further, the terminal apparatus may further determine to send the plurality of to-be-sent uplink signals to the network apparatus.

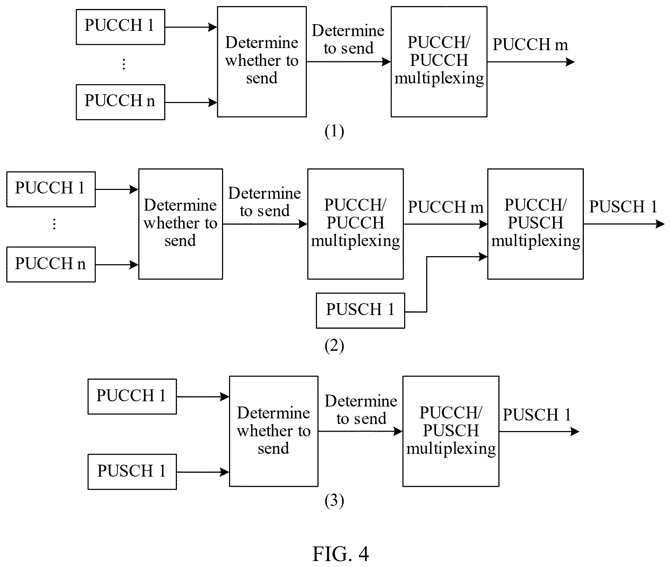

In an example, the plurality of to-be-sent uplink signals are all control signals (for example, denoted as a plurality of control signals). The terminal apparatus may first determine (or decide), according to the criterion 1, whether to send the plurality of control signals, and when a determining result is to send the plurality of control signals, multiplex the plurality of control signals in the first uplink channel. Specifically, if the plurality of control signals include an uplink signal that is allowed to be sent by the terminal apparatus within the non-active time of the cell DRX, the terminal apparatus determines to send the plurality of control signals, and multiplexes the plurality of control signals in the first uplink channel, as shown in (1) in FIG. 4. Alternatively, if the plurality of control signals each are an uplink signal that is not allowed to be sent by the terminal apparatus within the non-active time of the cell DRX, the terminal apparatus determines not to send the plurality of control signals, and does not perform S301 and S302. In this example, the first uplink channel may be a control channel configured for the plurality of control signals, or may be a new control channel. This is not limited. In (1) in FIG. 4, a plurality of uplink channels configured for the plurality of control signals are denoted as a PUCCH 1, ..., and a PUCCH n, n is a positive integer greater than 1, the first uplink channel is denoted as a PUCCH m, and m is a positive integer greater than 1.

For example, the plurality of control signals include a HARQ ACK signal corresponding to a dynamically scheduled PDCCH and periodically scheduled CSI. Because the HARQ ACK signal corresponding to the dynamically scheduled PDCCH is an uplink signal that is allowed to be sent by the terminal apparatus within the non-active time of the cell DRX, even if the periodically scheduled CSI is an uplink signal that is not allowed to be sent by the terminal apparatus within the non-active time of the cell DRX, the terminal apparatus may still determine, according to the criterion 1, to send the HARQ ACK signal corresponding to the dynamically scheduled PDCCH and the periodically scheduled CSI, and multiplex the HARQ ACK signal corresponding to the dynamically scheduled PDCCH and the periodically scheduled CSI in the first uplink channel. For another example, the plurality of control signals include a periodically scheduled SRS and periodically scheduled CSI. Because both the periodically scheduled SRS and the periodically scheduled CSI are uplink signals that are not allowed to be sent by the terminal apparatus within the non-active time of the cell DRX, the terminal apparatus may determine, according to the criterion 1, not to send the periodically scheduled SRS and the periodically scheduled CSI.

In another example, the plurality of to-be-sent uplink signals include a plurality of control signals and at least one piece of uplink data. The terminal apparatus may first determine (or decide), according to the criterion 1, whether to send the plurality of to-be-sent uplink signals, and when a determining result is to send the plurality of to-be-sent uplink signals, multiplex the plurality of to-be-sent uplink signals in the first uplink channel. Specifically, if the plurality of to-be-sent uplink signals include an uplink signal that is allowed to be sent by the terminal apparatus within the non-active time of the cell DRX, the terminal apparatus determines to send the plurality of to-be-sent uplink signals, multiplexes the plurality of control signals in one control channel, and then multiplexes the plurality of to-be-sent uplink signals in the first uplink channel, as shown in (2) in FIG. 4. Alternatively, if the plurality of to-be-sent uplink signals each are an uplink signal that is not allowed to be sent by the terminal apparatus within the non-active time of the cell DRX, the terminal apparatus determines not to send the plurality of to-be-sent uplink signals, and does not perform S301 and S302. In this example, the first uplink channel may be a data channel configured for the uplink data. In (2) in FIG. 4, a plurality of uplink channels configured for the plurality of control signals are denoted as a PUCCH 1, ..., and a PUCCH n, a control channel in which the plurality of control signals are multiplexed is denoted as a PUCCH m, and an uplink channel configured for the at least one piece of uplink data is denoted as a PUSCH 1. Correspondingly, the first uplink channel is the PUSCH 1. Both n and m are positive integers greater than 1.

For example, the plurality of to-be-sent uplink signals include a HARQ ACK signal corresponding to a dynamically scheduled PDCCH, periodically scheduled CSI, and dynamically scheduled uplink data. Because both the HARQ ACK signal corresponding to the dynamically scheduled PDCCH and the dynamically scheduled uplink data are uplink signals that are allowed to be sent by the terminal apparatus within the non-active time of the cell DRX, even if the periodically scheduled CSI is an uplink signal that is not allowed to be sent by the terminal apparatus within the non-active time of the cell DRX, the terminal apparatus may still determine, according to the criterion 1, to send the HARQ ACK signal corresponding to the dynamically scheduled PDCCH, the periodically scheduled CSI, and the dynamically scheduled uplink data, multiplex the HARQ ACK signal corresponding to the dynamically scheduled PDCCH and the periodically scheduled CSI in one uplink channel, and then multiplex the HARQ ACK signal, the periodically scheduled CSI, and the dynamically scheduled uplink data in the first uplink channel. For another example, the plurality of to-be-sent uplink signals include a periodically scheduled SRS, periodically scheduled CSI, and uplink data sent by using a configured grant PUSCH. Because the periodically scheduled SRS, the periodically scheduled CSI, and the uplink data sent by using the configured grant PUSCH are all uplink signals that are not allowed to be sent by the terminal apparatus within the non-active time of the Cell DRX, the terminal apparatus may determine, according to the criterion 1, not to send the plurality of to-be-sent uplink signals.

In another example, the plurality of to-be-sent uplink signals are two uplink signals, one is a control signal, and the other is uplink data. The terminal apparatus may first determine (or decide) whether to send the two uplink signals, and when a determining result is to send the two uplink signals, multiplex the two uplink signals in the first uplink channel. Specifically, if the two uplink signals include an uplink signal that is allowed to be sent by the terminal apparatus within the non-active time of the cell DRX, the terminal apparatus determines to send the two uplink signals, and multiplexes the two uplink signals in the first uplink channel, as shown in (3) in FIG. 4. Alternatively, if the two uplink signals each are an uplink signal that is not allowed to be sent by the terminal apparatus within the non-active time of the cell DRX, the terminal apparatus determines not to send the two uplink signals, and does not perform S301 and S302. In this example, the first uplink channel may be a data channel configured for the uplink data. In (3) in FIG. 4, a control channel on which the control signal is located is denoted as a PUCCH 1, the data channel configured for the uplink data is denoted as a PUSCH 1, and correspondingly, the first uplink channel is the PUSCH 1.

For example, the plurality of to-be-sent uplink signals include periodically scheduled CSI and dynamically scheduled uplink data. Because the dynamically scheduled uplink data is an uplink signal that is allowed to be sent by the terminal apparatus within the non-active time of the cell DRX, even if the periodically scheduled CSI is an uplink signal that is not allowed to be sent by the terminal apparatus within the non-active time of the cell DRX, the terminal apparatus may still determine, according to the criterion 1, to send the periodically scheduled CSI and the dynamically scheduled uplink data, and multiplexes the periodically scheduled CSI and the dynamically scheduled uplink data in the first uplink channel. For another example, the plurality of to-be-sent uplink signals include a periodically scheduled SRS and uplink data sent by using a configured grant PUSCH. Because both the periodically scheduled SRS and the uplink data sent by using the configured grant PUSCH are uplink signals that are not allowed to be sent by the terminal apparatus within the non-active time of the Cell DRX, the terminal apparatus may determine, according to the criterion 1, not to send the plurality of to-be-sent uplink signals.

It should be noted that "PUCCH/PUCCH" in FIG. 4 indicates that one or more control signals are multiplexed in one uplink channel (for example, a control channel). "PUCCH/PUSCH" in FIG. 4 indicates that one or more control signals and uplink data are multiplexed in one uplink channel (for example, a data channel). In addition, in (2) in FIG. 4, that the plurality of to-be-sent uplink signals include only one piece of uplink data is used as an example. It should be understood that the plurality of to-be-sent uplink signals may alternatively include a plurality of pieces of uplink data. A specific implementation is similar, and details are not described again.

In another possible implementation, after S301, the terminal apparatus may determine the processing manner of the plurality of to-be-sent uplink signals according to the criterion 1. For example, the plurality of to-be-sent uplink signals include a first uplink signal. After the plurality of to-be-sent uplink signals are multiplexed in the first uplink channel, the terminal apparatus may determine that the first uplink signal is an uplink signal that is allowed to be sent by the terminal apparatus within the non-active time of the cell DRX, and determine to send the plurality of to-be-sent uplink signals to the network apparatus.

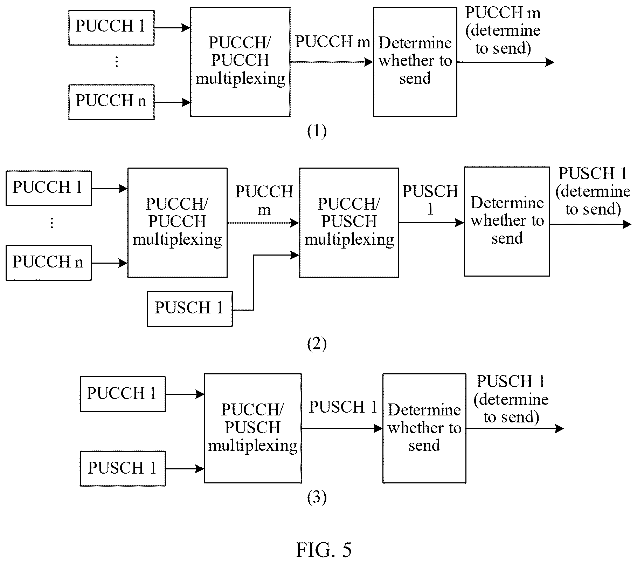

In an example, the plurality of to-be-sent uplink signals are all control signals (for example, denoted as a plurality of control signals). The terminal apparatus may first multiplex the plurality of control signals in the first uplink channel, and after the multiplexing is completed, determine (or decide), according to the criterion 1, whether to send the plurality of control signals. Specifically, if the plurality of control signals include an uplink signal that is allowed to be sent by the terminal apparatus within the non-active time of the cell DRX, the terminal apparatus determines to send the plurality of control signals (that is, send the first uplink channel), as shown in (1) in FIG. 5. Alternatively, if the plurality of control signals each are an uplink signal that is not allowed to be sent by the terminal apparatus within the non-active time of the cell DRX, the terminal apparatus determines not to send the plurality of to-be-sent control signals (that is, not to send the first uplink channel).

For example, the plurality of to-be-sent uplink signals include an SR and a HARQ ACK signal corresponding to a dynamically scheduled PDSCH. The terminal apparatus multiplexes the SR and the HARQ ACK signal corresponding to the dynamically scheduled PDSCH in the first uplink channel. Because the HARQ ACK signal corresponding to the dynamically scheduled PDSCH is an uplink signal that is allowed to be sent by the terminal apparatus within the non-active time of the cell DRX, even if the SR is an uplink signal that is not allowed to be sent by the terminal apparatus within the non-active time of the cell DRX, the terminal apparatus may still determine, according to the criterion 1, to send the SR and the HARQ ACK signal corresponding to the dynamically scheduled PDSCH (that is, determine to send the first uplink channel). For another example, the plurality of to-be-sent uplink signals include an SR and periodically scheduled CSI. The terminal apparatus multiplexes the SR and the periodically scheduled CSI in the first uplink channel. Because both the SR and the periodically scheduled CSI are uplink signals that are not allowed to be sent by the terminal apparatus within the non-active time of the cell DRX, the terminal apparatus may determine, according to the criterion 1, not to send the plurality of to-be-sent uplink signals (that is, determine not to send the first uplink channel).

In another example, the plurality of to-be-sent uplink signals include a plurality of control signals and uplink data. The terminal apparatus may first multiplex the plurality of control signals in one control channel, multiplex the plurality of control signals and the uplink data in the first uplink channel, and after the multiplexing is completed, determine (or decide), according to the criterion 1, whether to send the plurality of to-be-sent uplink signals. Specifically, if the plurality of to-be-sent uplink signals include an uplink signal that is allowed to be sent by the terminal apparatus within the non-active time of the cell DRX, the terminal apparatus determines to send the plurality of to-be-sent uplink signals (that is, send the first uplink channel), as shown in (2) in FIG. 5. Alternatively, if the plurality of to-be-sent uplink signals each are an uplink signal that is not allowed to be sent by the terminal apparatus within the non-active time of the cell DRX, the terminal apparatus determines not to send the plurality of to-be-sent uplink signals (that is, not to send the first uplink channel).

In another example, the plurality of to-be-sent uplink signals are two uplink signals, one is a control signal, and the other is uplink data. The terminal apparatus may first multiplex the two uplink signals in the first uplink channel, and then determine (or decide), according to the criterion 1, whether to send the two uplink signals. Specifically, if the two uplink signals include an uplink signal that is allowed to be sent by the terminal apparatus within the non-active time of the cell DRX, the terminal apparatus determines to send the two uplink signals (that is, send the first uplink channel), as shown in (3) in FIG. 5. Alternatively, if the two uplink signals each are an uplink signal that is not allowed to be sent by the terminal apparatus within the non-active time of the cell DRX, the terminal apparatus determines not to send the two uplink signals (that is, not to send the first uplink channel).

For example, the plurality of to-be-sent uplink signals include an SR and dynamically scheduled uplink data. The terminal apparatus multiplexes the SR and the dynamically scheduled uplink data in the first uplink channel. Because the dynamically scheduled uplink data is an uplink signal that is allowed to be sent by the terminal apparatus within the non-active time of the cell DRX, even if the SR is an uplink signal that is not allowed to be sent by the terminal apparatus within the non-active time of the cell DRX, the terminal apparatus may still determine, according to the criterion 1, to send the SR and the dynamically scheduled uplink data (that is, determine to send the first uplink channel). For another example, the plurality of to-be-sent uplink signals include an SR and uplink data sent by using a configured grant PUSCH. The terminal apparatus multiplexes, in the first uplink channel, the SR and the uplink data sent by using the configured grant PUSCH. Because both the SR and the uplink data sent by using the configured grant PUSCH are uplink signals that are not allowed to be sent by the terminal apparatus within the non-active time of the cell DRX, the terminal apparatus may determine, according to the criterion 1, not to send the plurality of to-be-sent uplink signals (that is, determine not to send the first uplink channel).

It should be noted that, for each symbol identifier in FIG. 5, correspondingly refer to descriptions in FIG. 4. Details are not described again.

In the foregoing implementation, the plurality of to-be-sent uplink signals include a first HARQ ACK signal, and the first HARQ ACK signal is an uplink signal that is allowed to be sent by the terminal apparatus within the non-active time of the cell DRX. After S301, the terminal apparatus may determine, according to the criterion 1, to send the plurality of to-be-sent uplink signals. In another possible implementation, the plurality of to-be-sent uplink signals include a first HARQ ACK signal. After S301, the terminal apparatus may determine the processing manner of the plurality of to-be-sent uplink signals based on the criterion 1 and priority information of the first HARQ ACK signal. For example, the plurality of to-be-sent uplink signals include a first HARQ ACK signal. After the plurality of to-be-sent uplink signals are multiplexed in the first uplink channel, the terminal apparatus may determine that the first HARQ ACK signal is an uplink signal that is allowed to be sent by the terminal apparatus within the non-active time of the cell DRX, and determine, based on priority information of the first HARQ ACK signal, to send the plurality of to-be-sent uplink signals to the network apparatus. The priority information of the first HARQ ACK signal may include one or more of the following: a priority of the first HARQ ACK signal is higher than a priority of a second uplink signal, a priority of the first HARQ ACK signal is higher than a priority of the first uplink channel, or a priority of the first HARQ ACK signal is a high priority.

The second uplink signal may be an uplink signal other than the first HARQ ACK signal in the plurality of to-be-sent uplink signals. Optionally, the second uplink signal may be a control signal, and the plurality of to-be-sent uplink signals are all control signals. In other words, the first uplink channel is a control channel. Optionally, the second uplink signal may be an uplink signal, such as an SR or CSI, that is not allowed to be sent by the terminal apparatus within the non-active time of the cell DRX; or the second uplink signal may be an uplink signal, such as a HARQ ACK signal, that is allowed to be sent by the terminal apparatus within the non-active time of the cell DRX. This is not limited.

Specifically, the plurality of to-be-sent uplink signals include a first HARQ ACK signal, and the terminal apparatus may first multiplex the plurality of control signals in the first uplink channel, and after the multiplexing is completed, determine that the first HARQ ACK signal is an uplink signal that is allowed to be sent by the terminal apparatus within the non-active time of the cell DRX, and determine (or decide), based on priority information of the first HARQ ACK signal, whether to send the plurality of to-be-sent uplink signals. Alternatively, the plurality of to-be-sent uplink signals include a first HARQ ACK signal, and the terminal apparatus may first multiplex the plurality of control signals in the first uplink channel, and after the multiplexing is completed, determine (or decide), based on priority information of the first HARQ ACK signal, whether to send the to-be-sent uplink signals.

For example, that the terminal apparatus determines (or decides), based on the priority information of the first HARQ ACK signal, whether to send the to-be-sent uplink signals may be implemented in the following three manners (for example, denoted as manner 1, manner 2, and manner 3).

Manner 1: If the priority of the first HARQ ACK signal is higher than the priority of the second uplink signal, the terminal apparatus determines to send the plurality of to-be-sent uplink signals (that is, send the first uplink channel); or if the priority of the first HARQ ACK signal is not higher than the priority of the second uplink signal, the terminal apparatus determines not to send the plurality of to-be-sent uplink signals (that is, not to send the first uplink channel). In other words, if the priority of the first HARQ ACK signal is higher than that of another uplink signal in the plurality of to-be-sent uplink signals, the terminal apparatus determines to send the plurality of to-be-sent uplink signals (that is, send the first uplink channel). That the priority of the first HARQ ACK signal is not higher than the priority of the second uplink signal may be understood as follows: The priority of the first HARQ ACK signal is equal to the priority of the second uplink signal, or the priority of the first HARQ ACK signal is lower than the priority of the second uplink signal.

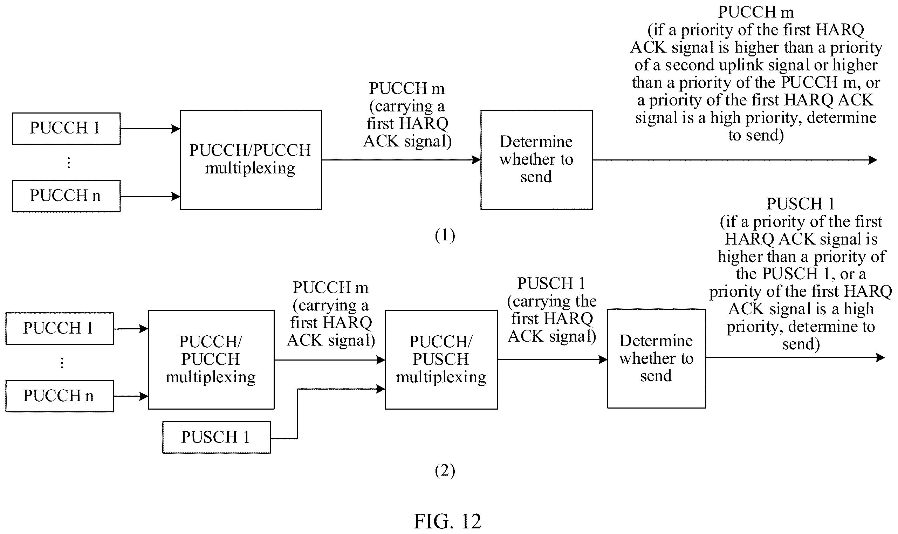

Optionally, the first uplink channel is a control channel. If the priority of the first HARQ ACK signal is higher than the priority of the second uplink signal, the terminal apparatus determines to send the plurality of to-be-sent uplink signals (that is, send the first uplink channel). For example, the plurality of to-be-sent uplink signals are all control signals, and the plurality of to-be-sent uplink signals include the first HARQ ACK signal. After multiplexing the plurality of to-be-sent uplink signals in the first uplink channel, the terminal apparatus may determine (or decide) whether to send the plurality of to-be-sent uplink signals. Specifically, if the priority of the first HARQ ACK signal is higher than the priority of the second uplink signal, the terminal apparatus determines to send the plurality of to-be-sent uplink signals, as shown in (1) in FIG. 12; or if the priority of the first HARQ ACK signal is not higher than the priority of the second uplink signal, the terminal apparatus determines not to send the plurality of to-be-sent uplink signals.

For example, the plurality of to-be-sent uplink signals include a HARQ ACK signal 1, an SR, and CSI. After multiplexing the HARQ ACK signal 1, the SR, and the CSI in the first uplink channel, the terminal apparatus determines that a priority of the HARQ ACK signal 1 is higher than a priority of the SR and the priority of the HARQ ACK signal 1 is higher than a priority of the CSI (that is, the priority of the HARQ ACK signal 1 is a high priority, and both the priority of the SR and the priority of the CSI are low priorities), and determines to send the HARQ ACK signal 1, the SR, and the CSI.

For another example, the plurality of to-be-sent uplink signals include a HARQ ACK signal 1, a HARQ ACK signal 2, and an SR. After multiplexing the HARQ ACK signal 1, the HARQ ACK signal 2, and the SR in the first uplink channel, the terminal apparatus determines that a priority of either of the HARQ ACK signal 1 and the HARQ ACK signal 2 is higher than a priority of the SR (that is, the priority of either of the HARQ ACK signal 1 and the HARQ ACK signal 2 is a high priority, and the priority of the SR is a low priority), and determines to send the HARQ ACK signal 1, the HARQ ACK signal 2, and the SR.

It should be noted that, when the priority of the first HARQ ACK signal is equal to priorities of all other uplink signals (for example, the priorities are all high priorities), the terminal apparatus may determine not to send the plurality of to-be-sent uplink signals. In another implementation, when the priority of the first HARQ ACK signal is equal to the priorities of all the other uplink signals (for example, the priorities are all high priorities), the terminal apparatus may alternatively determine to send the plurality of to-be-sent uplink signals. This is not limited.

Manner 2: If the priority of the first HARQ ACK signal is higher than the priority of the first uplink channel, the terminal apparatus determines to send the plurality of to-be-sent uplink signals (that is, send the first uplink channel); or if the priority of the first HARQ ACK signal is not higher than the priority of the first uplink channel, the terminal apparatus determines not to send the plurality of to-be-sent uplink signals (that is, not to send the first uplink channel). The first uplink channel may be a control channel, or may be a data channel. This is not limited. Optionally, the first uplink channel may be an uplink channel that is not allowed to be sent by the terminal apparatus within the non-active time of the cell DRX. For example, the first uplink channel may be a configured grant PUSCH. This is not limited. That the priority of the first HARQ ACK signal is not higher than the priority of the first uplink channel may be understood as follows: The priority of the first HARQ ACK signal is equal to the priority of the first uplink channel, or the priority of the first HARQ ACK signal is lower than the priority of the first uplink channel.

For example, the plurality of to-be-sent uplink signals are all control signals, and the plurality of to-be-sent uplink signals include the first HARQ ACK signal. After multiplexing the plurality of to-be-sent uplink signals in the first uplink channel (that is, a control channel), the terminal apparatus may determine (or decide) whether to send the plurality of to-be-sent uplink signals. Specifically, if the priority of the first HARQ ACK signal is higher than a priority of the control channel, the terminal apparatus determines to send the plurality of to-be-sent uplink signals, as shown in (1) in FIG. 12; or if the priority of the first HARQ ACK signal is not higher than a priority of the control channel, the terminal apparatus determines not to send the plurality of to-be-sent uplink signals.

For another example, the plurality of to-be-sent uplink signals include the first HARQ ACK signal and uplink data. After multiplexing the plurality of to-be-sent uplink signals in the first uplink channel (that is, a data channel), the terminal apparatus may determine (or decide) whether to send the plurality of to-be-sent uplink signals. Specifically, if the priority of the first HARQ ACK signal is higher than a priority of the data channel, the terminal apparatus determines to send the plurality of to-be-sent uplink signals, as shown in (2) in FIG. 12; or if the priority of the first HARQ ACK signal is not higher than a priority of the data channel, the terminal apparatus determines not to send the plurality of to-be-sent uplink signals.

For example, the first uplink channel is a configured grant PUSCH, and the plurality of to-be-sent uplink signals include a HARQ ACK signal 1. After multiplexing the plurality of to-be-sent uplink signals in the configured grant PUSCH, the terminal apparatus determines that a priority of the HARQ ACK signal 1 is higher than a priority of the configured grant PUSCH (that is, the priority of the HARQ ACK signal 1 is a high priority, and the priority of the configured grant PUSCH is a low priority), and determines to send the plurality of to-be-sent uplink signals (that is, determines to send the configured grant PUSCH).

For another example, the first uplink channel is a PUCCH, and the plurality of to-be-sent uplink signals include a HARQ ACK signal 1. After multiplexing the plurality of to-be-sent uplink signals in the PUCCH, the terminal apparatus determines that a priority of the HARQ ACK signal 1 is higher than a priority of the PUCCH (that is, the priority of the HARQ ACK signal 1 is a high priority, and the priority of the PUCCH is a low priority), and determines to send the plurality of to-be-sent uplink signals (that is, determines the PUCCH).

It should be noted that when the priority of the first HARQ ACK signal is equal to the priority of the first uplink channel (for example, both are high priorities), the terminal apparatus may determine not to send the plurality of to-be-sent uplink signals. In another implementation, when the priority of the first HARQ ACK signal is equal to the priority of the first uplink channel (for example, both are high priorities), the terminal apparatus may alternatively determine to send the plurality of to-be-sent uplink signals. This is not limited.

Manner 3: If the priority of the first HARQ ACK signal is a high priority, the terminal apparatus determines to send the plurality of to-be-sent uplink signals (that is, send the first uplink channel); or if the priority of the first HARQ ACK signal is a low priority, the terminal apparatus determines not to send the plurality of to-be-sent uplink signals (that is, not to send the first uplink channel).

For example, the plurality of to-be-sent uplink signals are all control signals, and the plurality of to-be-sent uplink signals include the first HARQ ACK signal. After multiplexing the plurality of to-be-sent uplink signals in the first uplink channel (that is, a control channel), the terminal apparatus may determine (or decide) whether to send the plurality of to-be-sent uplink signals. Specifically, if the priority of the first HARQ ACK signal is the high priority, the terminal apparatus determines to send the plurality of to-be-sent uplink signals, as shown in (1) in FIG. 12; or if the priority of the first HARQ ACK signal is the low priority, the terminal apparatus determines not to send the plurality of to-be-sent uplink signals.

For another example, the plurality of to-be-sent uplink signals include the first HARQ ACK signal and uplink data. After multiplexing the plurality of to-be-sent uplink signals in the first uplink channel (that is, a data channel), the terminal apparatus may determine (or decide) whether to send the plurality of to-be-sent uplink signals. Specifically, if the priority of the first HARQ ACK signal is the high priority, the terminal apparatus determines to send the plurality of to-be-sent uplink signals, as shown in (2) in FIG. 12; or if the priority of the first HARQ ACK signal is the low priority, the terminal apparatus determines not to send the plurality of to-be-sent uplink signals.

For example, the plurality of to-be-sent uplink signals include a HARQ ACK signal 1, an SR, and CSI. After multiplexing the HARQ ACK signal 1, the SR, and the CSI in the first uplink channel, the terminal apparatus determines that a priority of the HARQ ACK signal 1 is a high priority (a priority of the SR is a high priority or a low priority, and a priority of the CSI is a high priority or a low priority), and determines to send the HARQ ACK signal 1, the SR, and the CSI. For another example, the first uplink channel is a configured grant PUSCH, and the plurality of to-be-sent uplink signals include a HARQ ACK signal 1. After multiplexing the plurality of to-be-sent uplink signals in the configured grant PUSCH, the terminal apparatus determines that a priority of the HARQ ACK signal 1 is a high priority, and determines to send the plurality of to-be-sent uplink signals (that is, determines to send the configured grant PUSCH).

For another example, the first uplink channel is a configured grant PUCCH, and the plurality of to-be-sent uplink signals include a HARQ ACK signal 1. After multiplexing the plurality of to-be-sent uplink signals in the PUCCH, the terminal apparatus determines that a priority of the HARQ ACK signal 1 is a high priority, and determines to send the plurality of to-be-sent uplink signals (that is, determines to send the PUCCH).

It should be noted that for related descriptions of the priority, refer to the foregoing term introduction part. Details are not described herein again. In addition, for processing manners of the plurality of to-be-sent uplink signals in different manners, refer to Table 3.

**Table 3**

| First HARQ ACK signal | Second uplink signal or first uplink channel | Processing manner of the plurality of to-be-sent uplink signals in manner 1 or manner 2 | Processing manner of the plurality of to-be-sent uplink signals in manner 3 |
|---|---|---|---|
| High priority | High priority | Not send | Send |
| High priority | Low priority | Send | Send |
| Low priority | Low priority | Not send | Not send |
| Low priority | Low priority | Not send | Not send |

It should be noted that, for each symbol identifier in FIG. 12, correspondingly refer to descriptions in FIG. 4. Details are not described again.

In another possible implementation, after S301, the terminal apparatus may determine the processing manner of the plurality of to-be-sent uplink signals according to the criterion 2. For example, after the plurality of to-be-sent uplink signals are multiplexed in the first uplink channel, the terminal apparatus may determine that the first uplink channel is an uplink channel that is allowed to be sent by the terminal apparatus within the non-active time of the cell DRX, and determine to send the plurality of to-be-sent uplink signals to the network apparatus.

In an example, the plurality of to-be-sent uplink signals are all control signals (for example, denoted as a plurality of control signals). The terminal apparatus may first multiplex the plurality of control signals in the first uplink channel, and after the multiplexing is completed, determine (or decide), according to the criterion 2, whether to send the plurality of control signals. Specifically, if the first uplink channel is an uplink channel that is allowed to be sent by the terminal apparatus within the non-active time of the cell DRX, the terminal apparatus determines to send the plurality of control signals (that is, send the first uplink channel), as shown in (1) in FIG. 5; or if the first uplink channel is an uplink channel that is not allowed to be sent by the terminal apparatus within the non-active time of the cell DRX, the terminal apparatus determines not to send the plurality of control signals (that is, not send the first uplink channel).

For example, the plurality of to-be-sent uplink signals include an SR and a HARQ ACK signal corresponding to a dynamically scheduled PDSCH, and the terminal apparatus multiplexes, in the first uplink channel, the SR and the HARQ ACK signal corresponding to the dynamically scheduled PDSCH. Further, if the first uplink channel is a dynamically scheduled PUCCH, because the dynamically scheduled PUCCH is an uplink channel that is allowed to be sent by the terminal apparatus within the non-active time of the cell DRX, even if the SR is an uplink signal that is not allowed to be sent by the terminal apparatus within the non-active time of the cell DRX, the terminal apparatus may still determine, according to the criterion 2, to send the SR and the HARQ ACK signal corresponding to the dynamically scheduled PDSCH (that is, determine to send the first uplink channel). Alternatively, if the first uplink channel is a PUCCH configured by using higher layer signaling, because the PUCCH configured by using the higher layer signaling is an uplink channel that is not allowed to be sent by the terminal apparatus within the non-active time of the cell DRX, even if the HARQ ACK signal corresponding to the dynamically scheduled PDSCH is an uplink signal that is allowed to be sent by the terminal apparatus within the non-active time of the cell DRX, the terminal apparatus may still determine, according to the criterion 2, not to send the SR and the HARQ ACK signal corresponding to the dynamically scheduled PDSCH (that is, determine not to send the first uplink channel).

For another example, the plurality of to-be-sent uplink signals include an SR and periodically scheduled CSI, and the terminal apparatus multiplexes the SR and the periodically scheduled CSI in the first uplink channel. Further, if the first uplink channel is a dynamically scheduled PUCCH, because the dynamically scheduled PUCCH is an uplink channel that is allowed to be sent by the terminal apparatus within the non-active time of the cell DRX, even if both the SR and the periodically scheduled CSI are uplink signals that are not allowed to be sent by the terminal apparatus within the non-active time of the cell DRX, the terminal apparatus may still determine, according to the criterion 2, to send the SR and the periodically scheduled CSI (that is, determine to send the first uplink channel). Alternatively, if the first uplink channel is a PUCCH configured by using higher layer signaling, because the PUCCH configured by using the higher layer signaling is an uplink channel that is not allowed to be sent by the terminal apparatus within the non-active time of the cell DRX, the terminal apparatus may determine, according to the criterion 2, not to send the SR and the periodically scheduled CSI (that is, determine not to send the first uplink channel).

In another example, the plurality of to-be-sent uplink signals include a plurality of control signals and uplink data. The terminal apparatus may first multiplex the plurality of control signals in one control channel, multiplex the plurality of control signals and the uplink data in the first uplink channel, and after the multiplexing is completed, determine (or decide), according to the criterion 2, whether to send the plurality of to-be-sent uplink signals. Specifically, if the first uplink channel is an uplink channel that is allowed to be sent by the terminal apparatus within the non-active time of the cell DRX, the terminal apparatus determines to send the plurality of to-be-sent uplink signals (that is, send the first uplink channel), as shown in (2) in FIG. 5; or if the first uplink channel is an uplink channel that is not allowed to be sent by the terminal apparatus within the non-active time of the cell DRX, the terminal apparatus determines not to send the plurality of to-be-sent uplink signals (that is, not send the first uplink channel).

For example, the plurality of to-be-sent uplink signals include a HARQ ACK signal corresponding to a dynamically scheduled PDCCH, periodically scheduled CSI, and dynamically scheduled uplink data. The terminal apparatus multiplexes the HARQ ACK signal corresponding to the dynamically scheduled PDCCH and the periodically scheduled CSI in one uplink channel, and multiplexes the HARQ ACK signal corresponding to the dynamically scheduled PDCCH, the periodically scheduled CSI, and the dynamically scheduled uplink data in the first uplink channel. The first uplink channel is a dynamically scheduled PUSCH. Because the dynamically scheduled PUSCH is an uplink channel that is allowed to be sent by the terminal apparatus within the non-active time of the cell DRX, even if the periodically scheduled CSI is an uplink signal that is not allowed to be sent by the terminal apparatus within the non-active time of the cell DRX, the terminal apparatus may still determine the plurality of to-be-sent uplink signals (that is, determine to send the first uplink channel) according to the criterion 2.

For another example, the plurality of to-be-sent uplink signals include a HARQ ACK signal corresponding to a dynamically scheduled PDCCH, periodically scheduled CSI, and uplink data sent by using a configured grant PUSCH. The terminal apparatus multiplexes the HARQ ACK signal corresponding to the dynamically scheduled PDCCH and the periodically scheduled CSI in one uplink channel, and multiplexes, in the first uplink channel, the HARQ ACK signal corresponding to the dynamically scheduled PDCCH, the periodically scheduled CSI, and the uplink data sent by using the configured grant PUSCH. The first uplink channel is the configured grant PUSCH. Because the configured grant PUSCH is an uplink channel that is not allowed to be sent by the terminal apparatus within the non-active time of the cell DRX, even if the HARQ ACK signal corresponding to the dynamically scheduled PDCCH is an uplink signal that is allowed to be sent by the terminal apparatus within the non-active time of the cell DRX, the terminal apparatus may still determine, according to the criterion 2, not to send the plurality of to-be-sent uplink signals (that is, determine not to send the first uplink channel).

In another example, the plurality of to-be-sent uplink signals are two uplink signals, one is a control signal, and the other is uplink data. The terminal apparatus may first multiplex the two uplink signals in the first uplink channel, and then determine (or decide), according to the criterion 2, whether to send the two uplink signals. Specifically, if the first uplink channel is an uplink channel that is allowed to be sent by the terminal apparatus within the non-active time of the cell DRX, the terminal apparatus determines to send the two uplink signals (that is, send the first uplink channel), as shown in (3) in FIG. 5; or if the first uplink channel is an uplink channel that is not allowed to be sent by the terminal apparatus within the non-active time of the cell DRX, the terminal apparatus determines not to send the two uplink signals (that is, not to send the first uplink channel).

In another possible implementation, the terminal apparatus may determine the processing manner of the plurality of to-be-sent uplink signals according to the criterion 3. For example, the terminal apparatus may determine an uplink signal that is in the plurality of to-be-sent uplink signals and that is allowed to be sent by the terminal apparatus within the non-active time of the cell DRX, and multiplex, in a third uplink channel, the uplink signal that is allowed to be sent by the terminal apparatus within the non-active time of the cell DRX. If the plurality of to-be-sent uplink signals each are an uplink signal sent by the terminal apparatus within the non-active time of the cell DRX, the third uplink channel is the first uplink channel. In FIG. 3, an example in which the third uplink channel is the first uplink channel is used. In addition, if the plurality of to-be-sent uplink signals include only one uplink signal that is an uplink signal sent by the terminal apparatus within the non-active time of the cell DRX, the third uplink channel is an uplink channel configured for the one uplink signal.

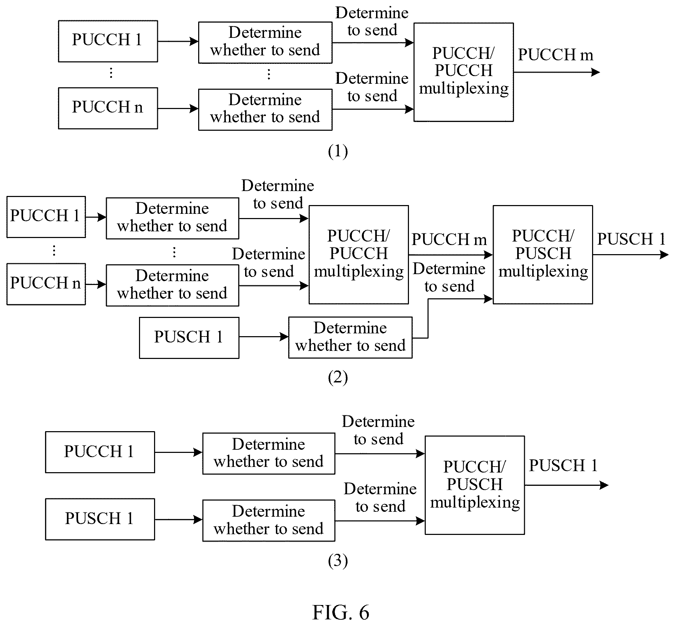

In an example, the plurality of to-be-sent uplink signals are all control signals (for example, denoted as a plurality of control signals). The terminal apparatus may first determine (or decide), according to the criterion 3, whether to send the plurality of control signals, and when a determining result is to send some or all of the plurality of control signals, multiplex the some or all of the control signals in the third uplink channel. Specifically, if some or all of the plurality of control signals are uplink signals that are allowed to be sent by the terminal apparatus within the non-active time of the cell DRX, the terminal apparatus determines to send the some or all of the control signals, and multiplexes the some or all of the control signals in the third uplink channel, as shown in (1) in FIG. 6. Alternatively, if the plurality of control signals each are an uplink signal that is not allowed to be sent by the terminal apparatus within the non-active time of the cell DRX, the terminal apparatus determines not to send the plurality of to-be-sent control signals.

For another example, the plurality of to-be-sent uplink signals include a plurality of control signals and uplink data. The terminal apparatus may first determine (or decide), according to the criterion 3, whether to send the plurality of control signals, and when a determining result is to send some or all of the plurality of control signals, multiplex the some or all of the control signals in one control channel. Further, the terminal apparatus determines (or decides), according to the criterion 3, whether to send the uplink data, and when a determining result is to send the uplink data, multiplexes the some or all of the control signals and the uplink data in the third uplink channel. Specifically, if some or all of the plurality of control signals are uplink signals that are allowed to be sent by the terminal apparatus within the non-active time of the cell DRX, the terminal apparatus determines to send the some or all of the control signals, and multiplexes the some or all of the control signals in one control channel. Further, if the uplink data is an uplink signal that is allowed to be sent by the terminal apparatus within the non-active time of the cell DRX, the terminal apparatus determines to send the uplink data, and multiplexes the some or all of the control signals and the uplink data in the third uplink channel, as shown in (2) in FIG. 6; or if the uplink data is an uplink signal that is not allowed to be sent by the terminal apparatus within the non-active time of the cell DRX, the terminal apparatus determines not to send the uplink data, that is, to send only the some or all of the control signals. Alternatively, if the plurality of control signals each are an uplink signal that is not allowed to be sent by the terminal apparatus within the non-active time of the cell DRX, the terminal apparatus determines not to send the plurality of control signals. Further, if the uplink data is an uplink signal that is allowed to be sent by the terminal apparatus within the non-active time of the cell DRX, the terminal apparatus determines to send the uplink data. In this case, the third uplink channel is a data channel configured for the uplink data. Alternatively, if the uplink data is an uplink signal that is not allowed to be sent by the terminal apparatus within the non-active time of the cell DRX, the terminal apparatus determines not to send the uplink data, that is, not to send the plurality of to-be-sent uplink signals.

For another example, the plurality of to-be-sent uplink signals are two uplink signals, one is a control signal, and the other is uplink data. The terminal apparatus may first determine (or decide), according to the criterion 3, whether to send the two uplink signals, and when a determining result is to send some or all of the two uplink signals, multiplex the some or all of the uplink channels in the third uplink channel. Specifically, if the two uplink signals each are an uplink signal that is allowed to be sent by the terminal apparatus within the non-active time of the cell DRX, the terminal apparatus determines to send the two uplink signals, and multiplexes the two uplink signals in the third uplink channel, as shown in (3) in FIG. 6. Alternatively, if one of the two uplink signals is an uplink signal that is allowed to be sent by the terminal apparatus within the non-active time of the cell DRX, the terminal apparatus determines to send the one uplink signal. In this case, the third uplink channel is an uplink channel configured for the one uplink signal. Alternatively, if the two uplink signals each are an uplink signal that is not allowed to be sent by the terminal apparatus within the non-active time of the cell DRX, the terminal apparatus determines not to send the two uplink signals.

For example, the plurality of to-be-sent uplink signals include periodically scheduled CSI, an SR, a HARQ ACK signal corresponding to a dynamically scheduled PDCCH, a HARQ ACK signal corresponding to a dynamically scheduled PDSCH, and dynamically scheduled uplink data. Because both the periodically scheduled CSI and the SR are uplink signals that are not allowed to be sent by the terminal apparatus within the non-active time of the cell DRX, and both the HARQ ACK signal corresponding to the dynamically scheduled PDCCH and the HARQ ACK signal corresponding to the dynamically scheduled PDSCH are uplink signals that are allowed to be sent by the terminal apparatus within the non-active time of the cell DRX, the terminal apparatus determines, according to the criterion 3, to send the HARQ ACK signal corresponding to the dynamically scheduled PDCCH and the HARQ ACK signal corresponding to the dynamically scheduled PDSCH, determines not to send the periodically scheduled CSI and the SR, and multiplexes the HARQ ACK signal corresponding to the dynamically scheduled PDCCH and the HARQ ACK signal corresponding to the dynamically scheduled PDSCH in one uplink channel. Further, because the dynamically scheduled uplink data is an uplink signal that is allowed to be sent by the terminal apparatus within the non-active time of the cell DRX, the terminal apparatus determines, according to the criterion 3, to send the dynamically scheduled uplink data, and multiplexes the HARQ ACK signal corresponding to the PDCCH, the HARQ ACK signal corresponding to the dynamically scheduled PDSCH, and the dynamically scheduled uplink data in the third uplink channel (for example, an uplink channel configured for the dynamically scheduled uplink data).

It should be noted that, in FIG. 6, an example in which the plurality of to-be-sent uplink signals each are an uplink signal that is allowed to be sent by the terminal apparatus within the non-active time of the cell DRX is used. In addition, for each symbol identifier in FIG. 6, correspondingly refer to descriptions in FIG. 4. Details are not described again.

In another possible implementation, if enhanced UL skip is configured, the terminal apparatus may determine the processing manner of the plurality of to-be-sent uplink signals according to the criterion 4. For example, the network apparatus may send fourth indication information to the terminal apparatus, where the fourth indication information may indicate a configuration of the enhanced UL skip. Correspondingly, the terminal apparatus receives the fourth indication information from the network apparatus. The fourth indication information may be carried in RRC signaling. This is not limited. For example, the fourth indication information may be enhancedSkipUplinkTxDynamic. When the enhanced UL skip is configured, a first data channel (for example, a PUSCH) and a control channel (for example, a PUCCH) overlap in time domain. Even if the first data channel does not carry uplink data (or the terminal apparatus does not send uplink data, or there is no MAC service data unit (service data unit, SDU) SDU in a MAC protocol data unit (protocol data unit, PDU) carried on the first data channel), the terminal apparatus may multiplex a control signal carried on the control channel in the data channel, and send the first data channel to the network apparatus, where the data channel carries a padding packet and the control signal carried on the control channel. In this embodiment of this application, the control signal carried on the control channel is some or all of the plurality of to-be-sent uplink signals. The terminal apparatus multiplexes the plurality of to-be-sent uplink signals in the first data channel, and determines a first time domain resource for sending the first data channel. The first time domain resource completely or partially overlaps with the non-active time of the cell DRX, and the terminal apparatus may determine (or decide), according to the criterion 4, whether to send the plurality of to-be-sent uplink signals. Optionally, the plurality of to-be-sent uplink signals may include a control signal that is not allowed to be sent by the terminal apparatus within the non-active time of the cell DRX. This is not limited.

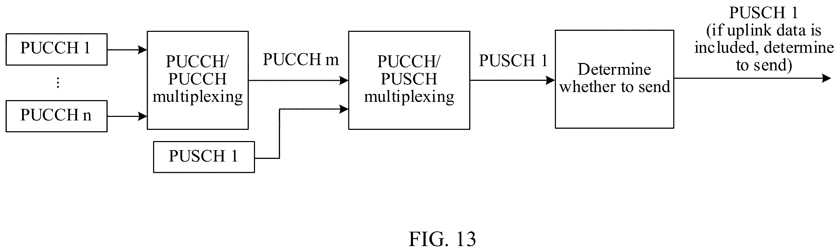

Specifically, after multiplexing the plurality of to-be-sent uplink signals in the first data channel, the terminal apparatus determines that the plurality of to-be-sent uplink signals include uplink data, and determines to send the plurality of to-be-sent uplink signals to the network apparatus (that is, determines to send the first data channel to the network apparatus), as shown in FIG. 13. For each symbol identifier in FIG. 13, correspondingly refer to descriptions in FIG. 4. Details are not described again. Alternatively, after multiplexing the plurality of to-be-sent uplink signals in the first data channel, the terminal apparatus determines that the plurality of to-be-sent uplink signals include no uplink data, and determines not to send the plurality of to-be-sent uplink signals to the network apparatus (that is, determines not to send the first data channel to the network apparatus). Optionally, the first data channel may be an uplink channel that is allowed to be sent by the terminal apparatus within the non-active time of the discontinuous transmission. For example, the first data channel is a dynamically scheduled PUSCH. This is not limited.

For example, the network apparatus configures enhanced UL skip for the terminal apparatus, the plurality of to-be-sent uplink signals include periodically scheduled CSI, an SR, and uplink data, the periodically scheduled CSI and the SR are multiplexed in a PUCCH 1, the PUCCH 1 overlaps with a dynamically scheduled PUSCH in time domain, and the terminal apparatus may multiplex the periodically scheduled CSI, the SR, and the uplink data in the dynamically scheduled PUSCH. Further, a time domain resource used to send the dynamically scheduled PUSCH partially or completely overlaps with the non-active time of the cell DRX. Because the plurality of to-be-sent uplink signals include uplink data, even if both the periodically scheduled CSI and the SR are uplink signals that are not allowed to be sent by the terminal apparatus within the non-active time of the cell DRX, the terminal apparatus may determine, according to the criterion 4, to send the plurality of to-be-sent uplink signals (that is, determine to send the dynamically scheduled PUSCH).

For another example, the network apparatus configures enhanced UL skip for the terminal apparatus, the plurality of to-be-sent uplink signals include periodically scheduled CSI, an SR, and a HARQ ACK signal corresponding to a dynamically scheduled PDCCH, the periodically scheduled CSI, the SR, and the HARQ ACK signal corresponding to the dynamically scheduled PDCCH are multiplexed in a PUCCH 2, the PUCCH 2 overlaps with a dynamically scheduled PUSCH in time domain, and the terminal apparatus may multiplex the periodically scheduled CSI, the SR, and the HARQ ACK signal corresponding to the dynamically scheduled PDCCH in the dynamically scheduled PUSCH. Further, a time domain resource used to send the dynamically scheduled PUSCH partially or completely overlaps with the non-active time of the cell DRX. Because the plurality of to-be-sent uplink signals include no uplink data, even if the HARQ ACK signal corresponding to the dynamically scheduled PDCCH is an uplink signal that is allowed to be sent by the terminal apparatus within the non-active time of the cell DRX, the terminal apparatus may determine, according to the criterion 4, not to send the plurality of to-be-sent uplink signals (that is, determine not to send the dynamically scheduled PUSCH).

The foregoing describes a case that the terminal apparatus separately uses the criterion 1, the criterion 2, the criterion 3, or the criterion 4 to determine the processing manner of the plurality of to-be-sent uplink signals. In another possible implementation, the terminal apparatus may determine the processing manner of the plurality of to-be-sent uplink signals according to the criterion 1 and the criterion 2. For example, the plurality of to-be-sent uplink signals include a first uplink signal. After multiplexing the plurality of to-be-sent uplink signals in the first uplink channel, the terminal apparatus may determine that the first uplink signal is an uplink signal that is allowed to be sent by the terminal apparatus within the non-active time of the cell DRX and the first uplink channel is an uplink channel that is allowed to be sent by the terminal apparatus within the non-active time of the cell DRX, and determine to send the plurality of to-be-sent uplink signals to the network apparatus. For a specific implementation process of this implementation, refer to the foregoing two implementations. Details are not described again.

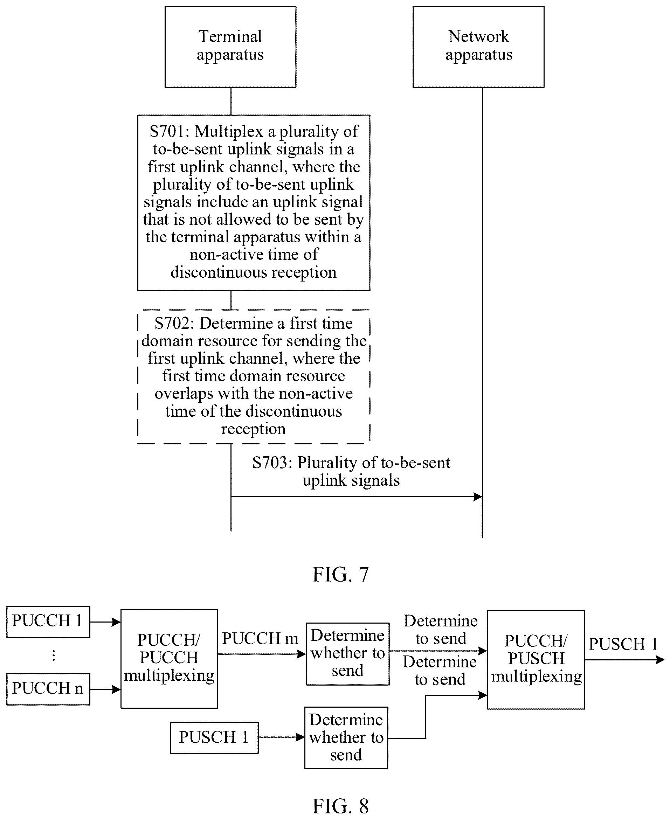

Optionally, based on the foregoing content, after S302, the method may further include: The terminal apparatus sends the first uplink channel to the network apparatus, and correspondingly, the network apparatus receives the first uplink channel from the terminal apparatus. That the terminal apparatus determines to send the plurality of to-be-sent uplink signals, that is, the plurality of to-be-sent uplink signals are multiplexed in the first uplink channel is used as an example. That the terminal apparatus sends the first uplink channel to the network apparatus may be replaced with that the terminal apparatus sends the plurality of to-be-sent uplink signals to the network apparatus, for example, sends the plurality of to-be-sent uplink signals to the network apparatus on a first time domain resource. Correspondingly, the network apparatus receives the plurality of to-be-sent uplink signals from the terminal apparatus, as shown in S703 in FIG. 7. That the plurality of to-be-sent uplink signals are multiplexed in the first uplink channel may be understood as that the plurality of to-be-sent uplink signals are carried on the first uplink channel. For S701 and S702 in FIG. 7, correspondingly refer to S301 and S302. Details are not described again. In addition, for the network apparatus, the plurality of to-be-sent uplink signals may be referred to as a plurality of uplink signals.

In the embodiment shown in FIG. 7, the terminal apparatus multiplexes the plurality of to-be-sent uplink signals in the first uplink channel, first determines the first time domain resource for sending the first uplink channel, and then sends the plurality of to-be-sent uplink signals to the network apparatus. In another possible implementation, the terminal apparatus multiplexes the plurality of to-be-sent uplink signals in the first uplink channel, and may directly send the first uplink channel to the network apparatus by using the first uplink channel, without determining the first time domain resource for sending the first uplink channel (for example, the first uplink channel is an uplink channel configured for one of the plurality of to-be-sent uplink signals). In other words, S702 is an optional step, and is represented by a dashed line in FIG. 7.

In another possible implementation, the plurality of to-be-sent uplink signals are all control signals, and correspondingly, the first uplink channel is a control channel. After S301, the terminal apparatus may determine a processing manner of the plurality of to-be-sent uplink signals and at least one piece of to-be-sent uplink data according to the criterion 1 and the criterion 3, or according to the criterion 2 and the criterion 3, or according to the criterion 1, the criterion 2, and the criterion 3. For example, after multiplexing the plurality of to-be-sent uplink signals in the first uplink channel, the terminal apparatus may determine a second uplink channel configured for the at least one piece of to-be-sent uplink data, determine a second time domain resource for sending the second uplink channel, and multiplex the plurality of to-be-sent uplink signals and the at least one piece of to-be-sent uplink data in the second uplink channel. For example, the terminal apparatus determines that the plurality of to-be-sent uplink signals each are an uplink signal sent by the terminal apparatus within the non-active time of the cell DRX and/or determines that the first uplink channel is an uplink channel sent by the terminal apparatus within the non-active time of the cell DRX; determines that the at least one piece of to-be-sent uplink data is an uplink signal that is allowed to be sent by the terminal apparatus within the non-active time of the cell DRX; and further determines to send the plurality of to-be-sent uplink signals and the at least one piece of to-be-sent uplink data. The second time domain resource partially or completely overlaps with the non-active time of the cell DRX. The second time domain resource further overlaps with the first time domain resource, or the second time domain resource further overlaps with the third time domain resource. In other words, a data channel configured for the at least one piece of to-be-sent uplink data and a plurality of uplink channels configured for the plurality of to-be-sent uplink signals overlap in time domain, and a time domain resource of the overlapping partially or completely overlaps with the non-active time of the cell DRX.

For example, the terminal apparatus may first multiplex the plurality of to-be-sent uplink signals in the first uplink channel, determine, according to the criterion 1 and/or the criterion 2, whether to send the plurality of to-be-sent uplink signals, determine, according to the criterion 3, whether to send the at least one piece of to-be-sent uplink data, and when a determining result is to send the plurality of to-be-sent uplink signals and send some or all of the at least one piece of to-be-sent uplink data, multiplex the plurality of to-be-sent uplink signals and the some or all of the uplink data in the second uplink channel. Specifically, if the plurality of to-be-sent uplink signals each are an uplink signal that is allowed to be sent by the terminal apparatus within the non-active time of the cell DRX and/or the first uplink channel is an uplink channel that is allowed to be sent by the terminal apparatus within the non-active time of the cell DRX, and some or all of the at least one piece of to-be-sent uplink data is an uplink signal that is allowed to be sent by the terminal apparatus within the non-active time of the cell DRX, the terminal apparatus determines to send the plurality of to-be-sent uplink signals, determines to send the some or all of the uplink data, and multiplexes the plurality of to-be-sent uplink signals and the some or all of the uplink data in the second uplink channel, as shown in FIG. 8. Alternatively, if the plurality of to-be-sent uplink signals each are an uplink signal that is not allowed to be sent by the terminal apparatus within the non-active time of the cell DRX and/or the first uplink channel is an uplink channel that is not allowed to be sent by the terminal apparatus within the non-active time of the cell DRX, and some or all of the at least one piece of to-be-sent uplink data is an uplink signal that is allowed to be sent by the terminal apparatus within the non-active time of the cell DRX, the terminal apparatus determines not to send the plurality of to-be-sent uplink signals, and determines to send the some or all of the uplink data. Alternatively, if the plurality of to-be-sent uplink signals each are an uplink signal that is allowed to be sent by the terminal apparatus within the non-active time of the cell DRX and/or the first uplink channel is an uplink channel that is allowed to be sent by the terminal apparatus within the non-active time of the cell DRX, and the at least one piece of to-be-sent uplink data is an uplink signal that is not allowed to be sent by the terminal apparatus within the non-active time of the cell DRX, the terminal apparatus determines to send the plurality of to-be-sent uplink signals (that is, determines to send the first uplink channel), and determines not to send the at least one piece of to-be-sent uplink data.

For example, the plurality of to-be-sent uplink signals include periodically scheduled CSI, an SR, a HARQ ACK signal corresponding to a dynamically scheduled PDCCH, and dynamically scheduled uplink data, and the terminal apparatus multiplexes, in the first uplink channel, the periodically scheduled CSI, the SR, and the HARQ ACK signal corresponding to the dynamically scheduled PDCCH. Because the HARQ ACK signal corresponding to the dynamically scheduled PDCCH is an uplink signal that is allowed to be sent by the terminal apparatus within the non-active time of the cell DRX, the terminal apparatus determines, according to the criterion 1, to send the periodically scheduled CSI, the SR, and the HARQ ACK signal corresponding to the dynamically scheduled PDCCH. Further, because the dynamically scheduled uplink data is an uplink signal that is allowed to be sent by the terminal apparatus within the non-active time of the cell DRX, the terminal apparatus determines, according to the criterion 3, to send the dynamically scheduled uplink data, and multiplexes the periodically scheduled CSI, the SR, the HARQ ACK signal corresponding to the dynamically scheduled PDCCH, and the dynamically scheduled uplink data in the second uplink channel. Alternatively, because the first uplink channel (for example, a dynamically scheduled PUCCH) is an uplink channel that is allowed to be sent by the terminal apparatus within the non-active time of the cell DRX, the terminal apparatus determines, according to the criterion 2, to send the periodically scheduled CSI, the SR, and the HARQ ACK signal corresponding to the dynamically scheduled PDCCH. Further, because the dynamically scheduled uplink data is an uplink signal that is allowed to be sent by the terminal apparatus within the non-active time of the cell DRX, the terminal apparatus determines, according to the criterion 3, to send the dynamically scheduled uplink data, and multiplexes the periodically scheduled CSI, the SR, the HARQ ACK signal corresponding to the dynamically scheduled PDCCH, and the dynamically scheduled uplink data in the second uplink channel. Alternatively, because the first uplink channel (for example, a PUCCH configured by using higher layer signaling) is an uplink channel that is not allowed to be sent by the terminal apparatus within the non-active time of the cell DRX, the terminal apparatus determines, according to the criterion 2, not to send the periodically scheduled CSI, the SR, and the HARQ ACK signal corresponding to the dynamically scheduled PDCCH. Further, because the dynamically scheduled uplink data is an uplink signal that is allowed to be sent by the terminal apparatus within the non-active time of the cell DRX, the terminal apparatus determines, according to the criterion 3, to send the dynamically scheduled uplink data.

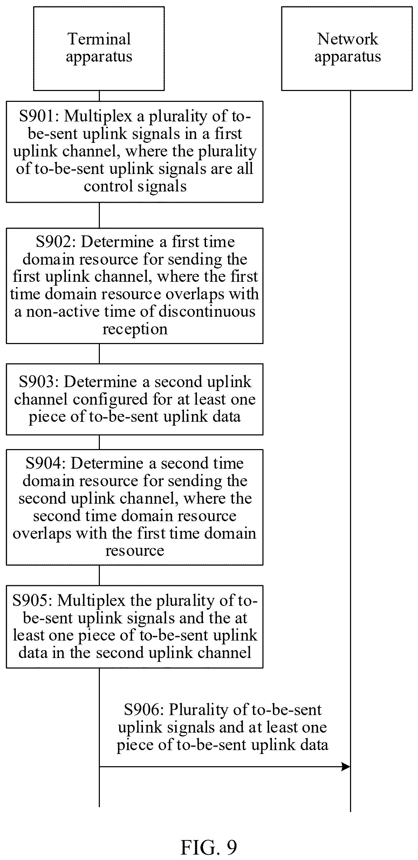

Optionally, based on the content of the foregoing implementation, after S302, the method may further include: The terminal apparatus determines a second uplink channel configured for the at least one piece of to-be-sent uplink data, as shown in S903 in FIG. 9; the terminal apparatus determines a second time domain resource for sending the second uplink channel, where the second time domain resource overlaps with the first time domain resource, as shown in S904 in FIG. 9; and the terminal apparatus multiplexes the plurality of to-be-sent uplink signals and the at least one piece of to-be-sent uplink data in the second uplink channel, as shown in S905 in FIG. 9. Further, the terminal apparatus may further send the second uplink channel to the network apparatus, and correspondingly, the network apparatus receives the second uplink channel from the terminal apparatus. That the terminal apparatus determines to send the plurality of to-be-sent uplink signals and the at least one piece of to-be-sent uplink data, that is, the plurality of to-be-sent uplink signals and the at least one piece of uplink data are multiplexed in the second uplink channel is used as an example. That the terminal apparatus sends the second uplink channel to the network apparatus may be replaced with that the terminal apparatus sends the plurality of to-be-sent uplink signals and the at least one piece of to-be-sent uplink data to the network apparatus, for example, sends the plurality of to-be-sent uplink signals and the at least one piece of to-be-sent uplink data to the network apparatus on the second time domain resource. Correspondingly, the network apparatus receives the plurality of to-be-sent uplink signals and the at least one piece of to-be-sent uplink data from the terminal apparatus, as shown in S906 in FIG. 9. That the plurality of to-be-sent uplink signals and the at least one piece of to-be-sent uplink data are multiplexed in the second uplink channel may be understood as that the plurality of to-be-sent uplink signals and the at least one piece of to-be-sent uplink data are carried on the second uplink channel. For S901 and S902 in FIG. 9, correspondingly refer to S301 and S302. Details are not described again. In addition, for the network apparatus, the plurality of to-be-sent uplink signals may be referred to as a plurality of uplink signals, or referred to as a plurality of control signals. The plurality of pieces of to-be-sent uplink data may be referred to as at least one piece of uplink data. For descriptions of the second time domain resource, refer to the foregoing content. Details are not described again.

In the foregoing embodiment, the terminal apparatus multiplexes, in the first uplink channel, the plurality of to-be-sent uplink signals that include an uplink signal that is not allowed to be sent by the terminal apparatus within the non-active time of the cell DRX, and determines the first time domain resource for sending the first uplink channel. In this way, even if the plurality of to-be-sent uplink signals include an uplink signal that is not allowed to be sent by the terminal apparatus within the non-active time of the cell DRX, the terminal apparatus may send the plurality of to-be-sent uplink signals to a network apparatus through the first uplink channel within the non-active time of the cell DRX, to process the plurality of to-be-sent uplink signals.

In the foregoing embodiment, the plurality of to-be-sent uplink signals are multiplexed in the first uplink channel, and the first time domain resource for sending the first uplink channel completely or partially overlaps with the non-active time of the cell DRX. In another possible implementation, a time domain resource occupied by a first reference signal may completely or partially overlap a fifth time domain resource for sending a fourth uplink channel, and the fifth time domain resource completely or partially overlaps with the non-active time of the cell DRX. The terminal apparatus may determine a processing manner of the first reference signal and the fourth uplink channel. Optionally, the time domain resource occupied by the first reference signal completely or partially overlaps with the non-active time of the cell DRX. The first reference signal may be, for example, an SRS. This is not limited.

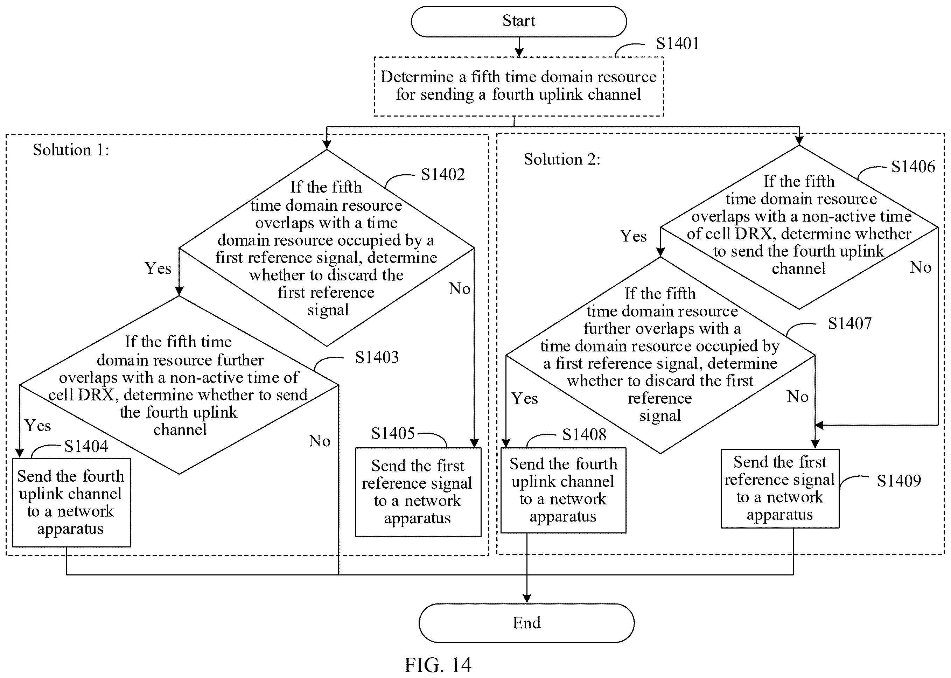

The following describes a processing manner of a first reference signal and a fourth uplink channel with reference to FIG. 14.

FIG. 14 is a schematic flowchart of a communication method according to an embodiment of this application. The method may be applied to the communication system shown in FIG. 1. This is not limited. For example, a terminal apparatus may be the terminal apparatus in the communication system shown in FIG. 1, or may be a component of the terminal apparatus in the communication system shown in FIG. 1. This is not limited. As shown in FIG. 14, the method may include the following content.

S1401: The terminal apparatus determines a fifth time domain resource for sending a fourth uplink channel.

S1401 is an optional step, and is represented by a dashed line in FIG. 14. For example, the terminal apparatus may determine a resource for sending the fourth uplink channel. The resource includes a time domain resource and/or a frequency domain resource. In this embodiment of this application, an example in which the terminal apparatus determines a time domain resource (for example, denoted as the fifth time domain resource) for sending the fourth uplink channel is used for description. The fifth time domain resource completely or partially overlaps with a non-active time of cell DRX. That the terminal apparatus determines the fifth time domain resource for sending the fourth uplink channel may be understood as that the terminal apparatus allocates the fifth time domain resource to the fourth uplink channel, or may be understood as that the terminal apparatus determines a time domain resource corresponding to the fourth uplink channel. This is not limited.

In this embodiment of this application, an uplink signal carried on the fourth uplink channel includes an uplink signal that is not allowed to be sent by the terminal apparatus within the non-active time of the cell DRX. For example, the fourth uplink channel is used to carry CSI, for example, used to carry only CSI; or the fourth uplink channel is used to carry L1-RSRP, for example, used to carry only L1-RSRP; or the fourth uplink channel is an uplink channel in which a plurality of to-be-sent uplink signals are multiplexed. For example, the fourth uplink channel may be the first uplink channel in the embodiment shown in FIG. 3. For the first uplink channel and the plurality of to-be-sent uplink signals, refer to the foregoing content. Details are not described again.

In this embodiment of this application, the fifth time domain resource may completely or partially overlap with the non-active time of the cell DRX. Further, the fifth time domain resource may further completely or partially overlap with a time domain resource occupied by a first reference signal, that is, the fourth uplink channel conflicts with the first reference signal. In this case, the terminal apparatus may perform solution 1 or solution 2. Solution 1: The terminal apparatus first processes a conflict problem between the fourth uplink channel and the first reference signal, and then determines whether to send the fourth uplink channel when the fifth time domain resource overlaps with the non-active time of the cell DRX, that is, performs S1402 to S1405. Solution 2: The terminal apparatus first determines whether to send the fourth uplink channel when the fifth time domain resource overlaps with the non-active time of the cell DRX, and then processes a conflict problem between the fourth uplink channel and the first reference signal, that is, performs S1406 to S1409. In FIG. 14, solution 1 and solution 2 are respectively shown by dashed-line boxes.

S1402: If the fifth time domain resource overlaps with the time domain resource occupied by the first reference signal, the terminal apparatus determines whether to discard the first reference signal.

Alternatively, S1402 may be expressed as follows: If the fifth time domain resource overlaps with the time domain resource occupied by the first reference signal, the terminal apparatus determines whether to discard the fourth uplink channel.

In S1402, if the fifth time domain resource overlaps with the time domain resource occupied by the first reference signal, the terminal apparatus may determine whether to discard (or send) the first reference signal. The first reference signal may be, for example, an SRS. This is not limited. The following separately provides descriptions from a perspective in which the fourth uplink channel is a control channel and a perspective in which the fourth uplink channel is a data channel.
(1) The fourth uplink channel is a control channel.

If the fourth uplink channel is used to carry CSI, and the first reference signal is a periodic or semi-persistent reference signal, the terminal apparatus may determine to discard the first reference signal, that is, determine not to discard the fourth uplink channel. Alternatively, if the fourth uplink channel is used to carry CSI, and the first reference signal is an aperiodic reference signal, the terminal apparatus may determine not to discard the first reference signal, that is, determine to discard the fourth uplink channel. Alternatively, if the fourth uplink channel is used to carry L1-RSRP, and the first reference signal is a periodic or semi-persistent reference signal, the terminal apparatus may determine to discard the first reference signal, that is, determine not to discard the fourth uplink channel. Alternatively, if the fourth uplink channel is used to carry L1-RSRP, and the first reference signal is an aperiodic reference signal, the terminal apparatus may determine not to discard the first reference signal, that is, determine to discard the fourth uplink channel. Alternatively, if the fourth uplink channel is a control channel in which a plurality of to-be-sent uplink signals are multiplexed, and the plurality of to-be-sent uplink signals include a HARQ ACK signal, the terminal apparatus may determine to discard the first reference signal, that is, determine not to discard the fourth uplink channel. Alternatively, if the fourth uplink channel is a control channel in which a plurality of to-be-sent uplink signals are multiplexed, and the plurality of to-be-sent uplink signals include an SR, the terminal apparatus may determine to discard the first reference signal, that is, determine not to discard the fourth uplink channel. For details, refer to content shown in Table 1.

It should be noted that if the fourth uplink channel carries only a HARQ ACK signal or carries only an SR, the terminal apparatus may determine to discard the first reference signal, that is, determine not to discard the fourth uplink channel.

(2) The fourth uplink channel is a data channel.

If the fourth uplink channel is a dynamically scheduled data channel, the terminal apparatus may determine to discard the first reference signal, that is, determine not to discard the fourth uplink channel. Alternatively, if the fourth uplink channel is a configured grant data channel, the terminal apparatus may determine to discard the first reference signal, that is, determine not to discard the fourth uplink channel. Alternatively, if the fourth uplink channel is a data channel with a low priority, configuration or scheduling on a same symbol is not allowed, as shown in Table 4. Optionally, both the dynamically scheduled data channel and the configured grant data channel may be data channels with a high priority. Table 4 shows an example in which the fourth uplink channel is a PUSCH.

**Table 4**

| | SRS |
|---|---|
| LP PUSCH | Not allowed to be configured or scheduled on a same symbol |
| HP DG PUSCH | The SRS is discarded |
| HP CG PUSCH | The SRS is discarded |

If the terminal apparatus determines to discard the first reference signal, S1403 is performed. If the terminal apparatus determines not to discard the first reference signal, the terminal apparatus may determine whether to send the first reference signal to a network apparatus, which is not shown in FIG. 14. In an example, the time domain resource occupied by the first reference signal does not overlap with the non-active time of the cell DRX, and the terminal apparatus may determine to send the first reference signal to the network apparatus, and send the first reference signal to the network apparatus. In another example, the time domain resource occupied by the first reference signal completely or partially overlaps with the non-active time of the cell DRX, the first reference signal is an uplink signal that is allowed to be sent by the terminal apparatus within the non-active time of the cell DRX, and the terminal apparatus may determine to send the first reference signal to the network apparatus, and send the first reference signal to the network apparatus. In another example, the time domain resource occupied by the first reference signal completely or partially overlaps with the non-active time of the cell DRX, the first reference signal is an uplink signal that is not allowed to be sent by the terminal apparatus within the non-active time of the cell DRX, and the terminal apparatus may determine not to send the first reference signal to the network apparatus. FIG. 14 shows an example in which the terminal apparatus sends the first reference signal to the network apparatus (that is, S1405). For example, if the first reference signal is a periodic or semi-persistent reference signal, for example, a P-SRS or an SP-SRS, the first reference signal may be an uplink signal that is not allowed to be sent by the terminal apparatus within the non-active time of the cell DRX. For another example, if the first reference signal is an aperiodic reference signal, for example, an A-SRS, the first reference signal may be an uplink signal that is allowed to be sent by the terminal apparatus within the non-active time of the cell DRX.

S1403: If the fifth time domain resource further overlaps with the non-active time of the cell DRX, the terminal apparatus determines whether to send the fourth uplink channel.

When the fifth time domain resource overlaps with the non-active time of the cell DRX, after determining to discard the first reference signal, the terminal apparatus may determine whether to send the fourth uplink channel. If the fourth uplink channel is used to carry CSI, and the CSI is an uplink signal that is not allowed to be sent by the terminal apparatus within the non-active time of the cell DRX, the terminal apparatus may determine not to send the fourth uplink channel. Alternatively, if the fourth uplink channel is used to carry L1-RSRP, and the L1-RSRP is an uplink signal that is not allowed to be sent by the terminal apparatus within the non-active time of the cell DRX, the terminal apparatus may determine not to send the fourth uplink channel. If the fourth uplink channel is an uplink channel in which a plurality of to-be-sent uplink signals are multiplexed, the terminal apparatus may determine, according to one or more of the criterion 1, the criterion 2, the criterion 3, or the criterion 4, whether to send the fourth uplink channel. For a specific implementation process, refer to the foregoing content. For example, if the plurality of to-be-sent uplink signals include an uplink signal that is allowed to be sent by the terminal apparatus within the non-active time of the cell DRX, the terminal apparatus may determine, according to the criterion 1, to send the fourth uplink channel, and send the fourth uplink channel to the network apparatus. For another example, if the plurality of to-be-sent uplink signals each are an uplink signal that is not allowed to be sent by the terminal apparatus within the non-active time of the cell DRX, the terminal apparatus may determine, according to the criterion 1, not to send the fourth uplink channel.

If the terminal apparatus determines to send the fourth uplink channel, S1404 is performed. If the terminal apparatus determines not to send the fourth uplink channel, the procedure ends.

S1404: The terminal apparatus sends the fourth uplink channel to the network apparatus.

S1404 may also be expressed as follows: The terminal apparatus sends the plurality of to-be-sent uplink signals to the network apparatus.

Correspondingly, the network apparatus receives the fourth uplink channel (or the plurality of uplink signals) from the terminal apparatus, which is not shown in FIG. 14.

S1405: The terminal apparatus sends the first reference signal to the network apparatus.

Correspondingly, the network apparatus receives the first reference signal from the terminal apparatus, which is not shown in FIG. 14.

S1406: If the fifth time domain resource overlaps with the non-active time of the cell DRX, the terminal apparatus determines whether to send the fourth uplink channel.

If the fourth uplink channel is used to carry CSI, and the CSI is an uplink signal that is not allowed to be sent by the terminal apparatus within the non-active time of the cell DRX, the terminal apparatus may determine not to send the fourth uplink channel. Alternatively, if the fourth uplink channel is used to carry L1-RSRP, and the L1-RSRP is an uplink signal that is not allowed to be sent by the terminal apparatus within the non-active time of the cell DRX, the terminal apparatus may determine not to send the fourth uplink channel. If the fourth uplink channel is an uplink channel in which a plurality of to-be-sent uplink signals are multiplexed, the terminal apparatus may determine, according to one or more of the criterion 1, the criterion 2, the criterion 3, or the criterion 4, whether to send the fourth uplink channel. For a specific implementation process, refer to the foregoing content. For example, if the plurality of to-be-sent uplink signals include an uplink signal that is allowed to be sent by the terminal apparatus within the non-active time of the cell DRX, the terminal apparatus may determine, according to the criterion 1, to send the fourth uplink channel, and send the fourth uplink channel to the network apparatus. For another example, if the plurality of to-be-sent uplink signals each are an uplink signal that is not allowed to be sent by the terminal apparatus within the non-active time of the cell DRX, the terminal apparatus may determine, according to the criterion 1, not to send the fourth uplink channel.

If the terminal apparatus determines to send the fourth uplink channel, S1407 is performed. If the terminal apparatus determines not to send the fourth uplink channel, because the fifth time domain resource further overlaps with the time domain resource occupied by the first reference signal, the terminal apparatus may determine whether to send the first reference signal. For details, refer to the foregoing content. Details are not described again. FIG. 14 shows an example in which the terminal apparatus sends the first reference signal to the network apparatus (that is, S1409).

S1407: If the fifth time domain resource further overlaps with the time domain resource occupied by the first reference signal, the terminal apparatus determines whether to discard the first reference signal.

S1407 may also be expressed as follows: If the fifth time domain resource further overlaps with the time domain resource occupied by the first reference signal, the terminal apparatus determines whether to discard the fourth uplink channel.

When the fifth time domain resource further overlaps with the time domain resource occupied by the first reference signal, the terminal apparatus determines to send the fourth uplink channel, and may determine whether to discard (or send) the first reference signal. For determining, by the terminal apparatus, whether to discard the first reference signal, refer to content of S1402. Details are not described again.

If the terminal apparatus determines to discard the first reference signal, content of S1408 is performed. If the terminal apparatus determines not to discard the first reference signal, that is, determines to discard the fourth uplink channel, the terminal apparatus may determine whether to send the first reference signal. For details, refer to the foregoing content. Details are not described again. FIG. 14 shows an example in which the terminal apparatus sends the first reference signal to the network apparatus (that is, S1409).

S1408: The terminal apparatus sends the fourth uplink channel to the network apparatus.

S1408 may also be expressed as follows: The terminal apparatus sends the plurality of to-be-sent uplink signals to the network apparatus.

Correspondingly, the network apparatus receives the fourth uplink channel (or the plurality of uplink signals) from the terminal apparatus, which is not shown in FIG. 14.

S1409: The terminal apparatus sends the first reference signal to the network apparatus.

Correspondingly, the network apparatus receives the first reference signal from the terminal apparatus, which is not shown in FIG. 14.

In this case, a procedure of the processing manner of the first reference signal and the fourth uplink channel ends.

In an example, it is assumed that the first reference signal is an SRS, the fourth uplink channel is a PUCCH, the fifth time domain resource overlaps with the non-active time of the cell DRX, the fifth time domain resource further overlaps with a time domain resource occupied by the SRS, and the time domain resource occupied by the SRS further overlaps with the non-active time of the cell DRX. Processing manners of a plurality of uplink signals (that is, the first reference signal and an uplink signal carried on the fourth uplink channel) in different solutions may be shown in Table 5.

**Table 5**

| | P-SRS | | SP-SRS | | A-SRS | |
|---|---|---|---|---|---|---|
| | Processing manner of the plurality of uplink signals in solution 1 | Processing manner of the plurality of uplink signals in solution 2 | Processing manner of the plurality of uplink signals in solution 1 | Processing manner of the plurality of uplink signals in solution 2 | Processing manner of the plurality of uplink signals in solution 1 | Processing manner of the plurality of uplink signals in solution 2 |
| A PUCCH carries only CSI or L1-RSRP | Neither the P-SRS nor the PUCCH is sent | Neither the P-SRS nor the PUCCH is sent | Neither the SP-SRS nor the PUCCH is sent | Neither the SP-SRS nor the PUCCH is sent | The A-SRS is sent, and the PUCCH is not sent | The A-SRS is sent, and the PUCCH is not sent |
| A PUCCH carries a HARQ ACK signal | The P-SRS is not sent, and the PUCCH is sent | The P-SRS is not sent, and the PUCCH is sent | The SP-SRS is not sent, and the PUCCH is sent | The SP-SRS is not sent, and the PUCCH is sent | The A-SRS is not sent, and the PUCCH is sent | The A-SRS is not sent, and the PUCCH is sent |
| A PUCCH carries an SR | Neither the P-SRS nor the PUCCH is sent | Neither the P-SRS nor the PUCCH is sent | Neither the SP-SRS nor the PUCCH is sent | Neither the SP-SRS nor the PUCCH is sent | Neither the A-SRS nor the PUCCH is sent | The A-SRS is sent, and the PUCCH is not sent |

In another example, it is assumed that the first reference signal is an SRS, the fourth uplink channel is a PUSCH, the fifth time domain resource overlaps with the non-active time of the cell DRX, the fifth time domain resource further overlaps with a time domain resource occupied by the SRS, and the time domain resource occupied by the SRS further overlaps with the non-active time of the cell DRX. Processing manners of a plurality of uplink signals (that is, the first reference signal and an uplink signal carried on the fourth uplink channel) in different solutions may be shown in Table 6.

**Table 6**

| | P-SRS | | SP-SRS | | A-SRS | |
|---|---|---|---|---|---|---|
| | Processing manner of the plurality of uplink signals in solution 1 | Processing manner of the plurality of uplink signals in solution 2 | Processing manner of the plurality of uplink signals in solution 1 | Processing manner of the plurality of uplink signals in solution 2 | Processing manner of the plurality of uplink signals in solution 1 | Processing manner of the plurality of uplink signals in solution 2 |
| HP DG PUSCH | The P-SRS is not sent, and the PUSCH is sent | The P-SRS is not sent, and the PUSCH is sent | The SP-SRS is not sent, and the PUSCH is sent | The SP-SRS is not sent, and the PUSCH is sent | The A-SRS is not sent, and the PUSCH is sent | The A-SRS is not sent, and the PUSCH is sent |
| HP CG PUSCH | Neither the P-SRS nor the PUSCH is sent | Neither the P-SRS nor the PUSCH is sent | Neither the SP-SRS nor the PUSCH is sent | Neither the SP-SRS nor the PUSCH is sent | Neither the A-SRS nor the PUSCH is sent | The A-SRS is sent, and the PUSCH is not sent |

It should be noted that Table 5 and Table 6 are used as examples, and embodiments of this application are not limited thereto.

In the foregoing embodiment, the time domain resource occupied by the first reference signal overlaps with the fifth time domain resource for sending the fourth uplink channel, and the terminal apparatus may determine the processing manner of the first reference signal and the fourth uplink channel by using solution 1 or solution 2. This implementation is flexible.

It may be understood that to implement functions in the foregoing embodiments, the base station and the terminal include corresponding hardware structures and/or software modules for performing the function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

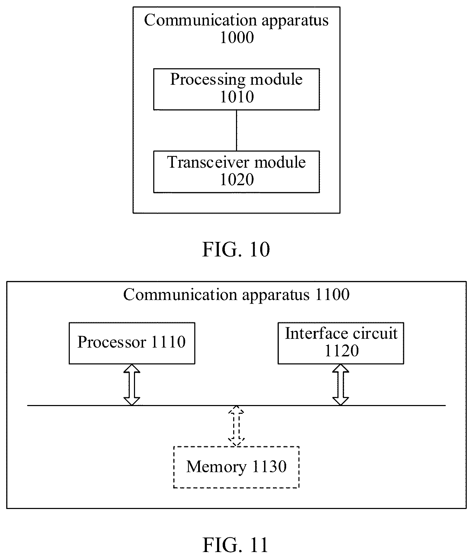

FIG. 10 and FIG. 11 are diagrams of structures of possible communication apparatuses according to an embodiment of this application. These communication apparatuses may be configured to implement functions of the terminal apparatus or the network apparatus in the foregoing method embodiments, and therefore can also achieve beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station. A communication apparatus 1000 is configured to implement a function of the terminal apparatus in the method embodiment shown in FIG. 3, FIG. 7, or FIG. 9, or is configured to implement a function of the network apparatus in the method embodiment shown in FIG. 7 or FIG. 9.

In a possible implementation, the communication apparatus 1000 may include a processing module 1010 and a transceiver module 1020. The processing module 1010 may be configured to perform steps performed by any communication apparatus (for example, the terminal apparatus or the network apparatus) in any one of the foregoing method embodiments. The transceiver module 1020 may be configured to receive or send related data, information, or messages.

In another possible implementation, the communication apparatus 1000 may include a transceiver module 1020, and the transceiver module 1020 may be configured to perform steps or methods performed by any communication apparatus (for example, the terminal apparatus or the network apparatus) in any one of the foregoing method embodiments.

It should be noted that the foregoing units may be independently disposed, or may be partially or completely integrated. For example, the transceiver module 1020 may include a sending module and a receiving module.

When the communication apparatus 1000 is configured to implement the function of the terminal apparatus in the method embodiment shown in FIG. 3, FIG. 7, or FIG. 9, the processing module 1010 is configured to: multiplex a plurality of to-be-sent uplink signals in a first uplink channel, where the plurality of to-be-sent uplink signals include an uplink signal that is not allowed to be sent by the terminal apparatus within a non-active time of discontinuous transmission; and determine a first time domain resource for sending the first uplink channel, where the first time domain resource overlaps with the non-active time of the discontinuous transmission.

In a possible implementation, the plurality of to-be-sent uplink signals include an uplink signal that is allowed to be sent by the terminal apparatus within the non-active time of the discontinuous transmission; or the first uplink channel is an uplink channel that is allowed to be sent by the terminal apparatus within the non-active time of the discontinuous transmission; or the plurality of to-be-sent uplink signals include an uplink signal that is allowed to be sent by the terminal apparatus within the non-active time of the discontinuous transmission, and the first uplink channel is an uplink channel that is allowed to be sent by the terminal apparatus within the non-active time of the discontinuous transmission.

In a possible implementation, the plurality of to-be-sent uplink signals include a first uplink signal, and before the plurality of to-be-sent uplink signals are multiplexed in the first uplink channel, the terminal apparatus may further determine that the first uplink signal is an uplink signal that is allowed to be sent by the terminal apparatus within the non-active time of the discontinuous transmission.

In a possible implementation, the plurality of to-be-sent uplink signals include a first uplink signal, and after the plurality of to-be-sent uplink signals are multiplexed in the first uplink channel, the processing module 1010 is further configured to: determine that the first uplink signal is an uplink signal that is allowed to be sent by the terminal apparatus within the non-active time of the discontinuous transmission, and determine to send the plurality of to-be-sent uplink signals to the network apparatus; or the processing module 1010 is further configured to: determine that the first uplink channel is an uplink channel that is allowed to be sent by the terminal apparatus within the non-active time of the discontinuous transmission, and determine to send the plurality of to-be-sent uplink signals to the network apparatus; or the processing module 1010 is further configured to: determine that the first uplink signal is an uplink signal that is allowed to be sent by the terminal apparatus within the non-active time of the discontinuous transmission, and the first uplink channel is an uplink channel that is allowed to be sent by the terminal apparatus within the non-active time of the discontinuous transmission, and determine to send the plurality of to-be-sent uplink signals to the network apparatus.

In a possible implementation, the plurality of to-be-sent uplink signals include a first uplink signal, and the processing module 1010 is further configured to: if the first uplink channel is a control channel, determine that the first uplink signal is an uplink signal that is allowed to be sent by the terminal apparatus within the non-active time of the discontinuous transmission, and determine to send the plurality of to-be-sent uplink signals to the network apparatus; or if the first uplink channel is a data channel, determine that the first uplink channel is an uplink channel that is allowed to be sent by the terminal apparatus within the non-active time of the discontinuous transmission, and determine to send the plurality of to-be-sent uplink signals to the network apparatus; or if the plurality of to-be-sent uplink signals include a hybrid automatic repeat request acknowledgement HARQ ACK signal, determine that the first uplink signal is an uplink signal that is allowed to be sent by the terminal apparatus within the non-active time of the discontinuous transmission, and determine to send the plurality of to-be-sent uplink signals to the network apparatus; or if the plurality of to-be-sent uplink signals include no HARQ ACK signal, determine that the first uplink channel is an uplink channel that is allowed to be sent by the terminal apparatus within the non-active time of the discontinuous transmission, and determine to send the plurality of to-be-sent uplink signals to the network apparatus.

In a possible implementation, the plurality of to-be-sent uplink signals each are a control signal, the first uplink channel is a control channel, and the processing module 1010 is further configured to: determine a second uplink channel configured for at least one piece of to-be-sent uplink data; determine a second time domain resource for sending the second uplink channel, where the second time domain resource overlaps with the non-active time of the discontinuous transmission, and the second time domain resource further overlaps with the first time domain resource; and multiplex the plurality of to-be-sent uplink signals and the at least one piece of to-be-sent uplink data in the second uplink channel. Optionally, the at least one piece of to-be-sent uplink data is data that is allowed to be sent by the terminal apparatus within the non-active time of the discontinuous transmission.

In a possible implementation, the transceiver module 1020 is further configured to receive first indication information from the network apparatus, where the first indication information indicates a configuration of the discontinuous transmission, and the configuration of the discontinuous transmission is used to determine an active time of the discontinuous transmission.

In a possible implementation, the transceiver module 1020 is further configured to send the plurality of to-be-sent uplink signals to the network apparatus.

When the communication apparatus 1000 is configured to implement the function of the terminal apparatus in the method embodiment shown in FIG. 14, the processing module 1010 is configured to: determine a fifth time domain resource for sending a fourth uplink channel, where the fourth uplink channel is used to carry channel state information, or the fourth uplink channel is used to carry layer 1 reference signal received power, or the fourth uplink channel is an uplink channel in which a plurality of to-be-sent uplink signals are multiplexed, and an uplink signal carried on the fourth uplink channel includes an uplink signal that is not allowed to be sent by the terminal apparatus within a non-active time of discontinuous transmission; when the fifth resource overlaps with the non-active time of the discontinuous transmission, determine not to send the fourth uplink channel to a network apparatus; and when the fifth time domain resource further overlaps with a time domain resource occupied by a first reference signal, determine to send the first reference signal to the network apparatus.

In a possible implementation, the first reference signal is an uplink signal that is allowed to be sent by the terminal apparatus within the non-active time of the discontinuous transmission.

In a possible implementation, the transceiver module 1020 is configured to receive fourth indication information from the network apparatus, where the fourth indication information indicates a configuration of enhanced uplink skip; and the processing module 1010 is further configured to: determine that the plurality of to-be-sent uplink signals include no uplink data; and determine not to send the fourth uplink channel to the network apparatus.

When the communication apparatus 1000 is configured to implement the function of the network apparatus in the method embodiment shown in FIG. 7 or FIG. 9, the transceiver module 1020 is configured to receive a plurality of uplink signals from a terminal apparatus, where the plurality of uplink signals include an uplink signal that is not allowed to be sent by the terminal apparatus within a non-active time of discontinuous transmission, the plurality of uplink signals are multiplexed in a first uplink channel, and a first time domain resource used to send the first uplink channel overlaps with the non-active time of the discontinuous transmission. Alternatively, the transceiver module 1020 is configured to receive a plurality of control signals and at least one piece of uplink data from a terminal apparatus, where the plurality of control signals include an uplink signal that is not allowed to be sent by the terminal apparatus within a non-active time of discontinuous transmission, the plurality of control signals and the at least one piece of uplink data are multiplexed in a second uplink channel, the second uplink channel is an uplink channel configured for the at least one piece of uplink data, a second time domain resource used to send the second uplink channel overlaps with the non-active time of the discontinuous transmission, the second time domain resource further overlaps with a first time domain resource, the first time domain resource is used to send a first uplink channel, the first uplink channel is an uplink channel in which the plurality of control signals are multiplexed when the terminal apparatus sends only the plurality of control signals to the network apparatus, and the first time domain resource overlaps with the non-active time of the discontinuous transmission.

In a possible implementation, the plurality of to-be-sent uplink signals include an uplink signal that is allowed to be sent by the terminal apparatus within the non-active time of the discontinuous transmission; or the first uplink channel is an uplink channel that is allowed to be sent by the terminal apparatus within the non-active time of the discontinuous transmission; or the plurality of to-be-sent uplink signals include an uplink signal that is allowed to be sent by the terminal apparatus within the non-active time of the discontinuous transmission, and the first uplink channel is an uplink channel that is allowed to be sent by the terminal apparatus within the non-active time of the discontinuous transmission.

In a possible implementation, the plurality of uplink signals include a first uplink signal, where the first uplink channel is a control channel, and the first uplink signal is an uplink signal that is allowed to be sent by the terminal apparatus within the non-active time of the discontinuous transmission; or the first uplink channel is a data channel, and the first uplink channel is an uplink channel that is allowed to be sent by the terminal apparatus within the non-active time of the discontinuous transmission; or the plurality of uplink signals include a HARQ ACK signal, and the first uplink signal is an uplink signal that is allowed to be sent by the terminal apparatus within the non-active time of the discontinuous transmission; or the plurality of uplink signals include no HARQ ACK signal, and the first uplink channel is an uplink channel that is allowed to be sent by the terminal apparatus within the non-active time of the discontinuous transmission.

In a possible implementation, the transceiver module 1020 is further used by the network apparatus to send first indication information to the terminal apparatus, where the first indication information indicates a configuration of the discontinuous transmission, and the configuration of the discontinuous transmission is used to determine the non-active time of the discontinuous transmission.

When the communication apparatus 1000 is configured to implement the function of the network apparatus in the foregoing method embodiments, the transceiver module 1020 is configured to receive a first reference signal from a terminal apparatus, where a time domain resource occupied by the first reference signal overlaps with a fifth time domain resource used to send a fourth uplink channel, the fifth resource overlaps with a non-active time of discontinuous transmission, the fourth uplink channel is used to carry channel state information, or the fourth uplink channel is used to carry layer 1 reference signal received power, or the fourth uplink channel is an uplink channel in which a plurality of uplink signals are multiplexed, and an uplink signal carried on the fourth uplink channel includes an uplink signal that is not allowed to be sent by the terminal apparatus within the non-active time of the discontinuous transmission. In a possible implementation, the first reference signal is an uplink signal that is allowed to be sent by the terminal apparatus within the non-active time of the discontinuous transmission.

In a possible implementation, the first reference signal is an uplink signal that is allowed to be sent by the terminal apparatus within the non-active time of the discontinuous transmission.

In a possible implementation, the transceiver module 1020 is further configured to send fourth indication information to the terminal apparatus, where the fourth indication information indicates a configuration of enhanced uplink skip, the plurality of to-be-sent uplink signals include a control signal that is not allowed to be sent by the terminal apparatus within the non-active time of the discontinuous transmission, and the plurality of to-be-sent uplink signals include no uplink data.

For more detailed descriptions of the processing module 1010 and the transceiver module 1020, refer to the related descriptions in the method embodiment shown in FIG. 3, FIG. 7, FIG. 9, or FIG. 14.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to: store instructions executed by the processor 1110, or store input data required for running instructions by the processor 1110, or store data generated after the processor 1110 runs instructions.

When the communication apparatus 1100 is configured to implement the method shown in FIG. 3, FIG. 7, FIG. 9, or FIG. 14, the processor 1110 is configured to implement a function of the processing module 1010, and the interface circuit 1120 is configured to implement a function of the transceiver module 1020.

When the communication apparatus is a chip used in a terminal, the chip in the terminal implements a function of the terminal in the foregoing method embodiments. The chip in the terminal receives, through another module (for example, a radio frequency module or an antenna) in the terminal, information sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip of the base station, or may be a CU, a DU, or another module, or may be an apparatus in an open radio access network (open radio access network, O-RAN) architecture, for example, an apparatus like an open CU or an open DU.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor or the like.

An embodiment of this application further provides a communication system. The communication system may include one or two of the following: a terminal apparatus or a network apparatus. For the terminal apparatus or the network apparatus, refer to the descriptions in the foregoing method embodiments. Details are not described again.

An embodiment of this application further provides a computer-readable storage medium, including program instructions. When the program instructions are run on a computer, the computer is enabled to perform the method or the steps performed by any communication apparatus (for example, the terminal apparatus or the network apparatus) in the foregoing embodiments.

An embodiment of this application further provides a computer program product, including program instructions. When the program instructions are run on a computer, the computer is enabled to perform the method or the steps performed by any communication apparatus (for example, the terminal apparatus or the network apparatus) in the foregoing embodiments.

An embodiment of this application provides a chip system. The chip system includes a processor, configured to implement the function (for example, perform a corresponding method or step) of the terminal apparatus or the network apparatus in the foregoing method. The chip system may include a chip, or may include a chip and another discrete component. Optionally, the chip system further includes a memory, and the memory is configured to store program instructions, so that the processor reads and executes the program instructions, to implement the corresponding method.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium and can write information into the storage medium. The storage medium may alternatively be a part of the processor. The processor and the storage medium may be located in an ASIC. In addition, the ASIC may be located in a base station or a terminal. The processor and the storage medium may exist in the base station or the terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

## Claims

1. A communication method, applied to a terminal apparatus, wherein the method comprises:
multiplexing a plurality of to-be-sent uplink signals in a first uplink channel;
determining a first time domain resource for sending the first uplink channel, wherein the first time domain resource overlaps with a non-active time of discontinuous transmission; and
if the plurality of to-be-sent uplink signals each are an uplink signal that is not allowed to be sent by the terminal apparatus within the non-active time of the discontinuous transmission, determining not to send the plurality of to-be-sent uplink signals.

2. The method according to claim 1, wherein the plurality of to-be-sent uplink signals comprise an uplink signal that is allowed to be sent by the terminal apparatus within the non-active time of the discontinuous transmission.

3. The method according to claim 1 or 2, wherein the plurality of to-be-sent uplink signals comprise a first uplink signal, and the method further comprises:
before the plurality of to-be-sent uplink signals are multiplexed in the first uplink channel, determining that the first uplink signal is an uplink signal that is allowed to be sent by the terminal apparatus within the non-active time of the discontinuous transmission.

4. The method according to claim 1 or 2, wherein the plurality of to-be-sent uplink signals comprise a first uplink signal, and the method further comprises:
after the plurality of to-be-sent uplink signals are multiplexed in the first uplink channel, determining that the first uplink signal is an uplink signal that is allowed to be sent by the terminal apparatus within the non-active time of the discontinuous transmission; and
determining to send the plurality of to-be-sent uplink signals to the network apparatus.

5. The method according to any one of claims 1 to 4, wherein the first uplink channel is an uplink channel that is allowed to be sent by the terminal apparatus within the non-active time of the discontinuous transmission.

6. The method according to any one of claims 1 to 3 and 5, wherein the plurality of to-be-sent uplink signals comprise the first uplink signal, and the method further comprises:
the first uplink channel being a control channel and determining that the first uplink signal is an uplink signal that is allowed to be sent by the terminal apparatus within the non-active time of the discontinuous transmission, and determining to send the plurality of to-be-sent uplink signals to the network apparatus; or
the first uplink channel being a data channel and determining that the first uplink channel is an uplink channel that is allowed to be sent by the terminal apparatus within the non-active time of the discontinuous transmission, and determining to send the plurality of to-be-sent uplink signals to the network apparatus; or
the plurality of to-be-sent uplink signals comprising a hybrid automatic repeat request acknowledgement HARQ ACK signal and determining that the first uplink signal is an uplink signal that is allowed to be sent by the terminal apparatus within the non-active time of the discontinuous transmission, and determining to send the plurality of to-be-sent uplink signals to the network apparatus; or
the plurality of to-be-sent uplink signals comprising no HARQ ACK signal and determining that the first uplink channel is an uplink channel that is allowed to be sent by the terminal apparatus within the non-active time of the discontinuous transmission, and determining to send the plurality of to-be-sent uplink signals to the network apparatus.

7. The method according to any one of claims 1 to 6, wherein the plurality of to-be-sent uplink signals each are a control signal, the first uplink channel is a control channel, and the method further comprises:
determining a second uplink channel configured for at least one piece of to-be-sent uplink data;
determining a second time domain resource for sending the second uplink channel, wherein the second time domain resource overlaps with the non-active time of the discontinuous transmission, and the second time domain resource further overlaps with the first time domain resource; and
multiplexing the plurality of to-be-sent uplink signals and the at least one piece of to-be-sent uplink data in the second uplink channel.

8. The method according to claim 7, wherein the at least one piece of to-be-sent uplink data is data that is allowed to be sent by the terminal apparatus within the non-active time of the discontinuous transmission.

9. The method according to claim 1 or 2, wherein the plurality of to-be-sent uplink signals comprise a first hybrid automatic repeat request acknowledgement HARQ ACK signal, and the method further comprises:
after the plurality of to-be-sent uplink signals are multiplexed in the first uplink channel, determining that a priority of the first HARQ ACK signal is higher than a priority of a second uplink signal, and determining to send the plurality of to-be-sent uplink signals to the network apparatus, wherein the second uplink signal is an uplink signal other than the first HARQ ACK signal in the plurality of to-be-sent uplink signals; or
after the plurality of to-be-sent uplink signals are multiplexed in the first uplink channel, determining that a priority of the first HARQ ACK signal is higher than a priority of the first uplink channel, and determining to send the plurality of to-be-sent uplink signals to the network apparatus, wherein the first uplink channel is an uplink channel that is not allowed to be sent by the terminal apparatus within the non-active time of the discontinuous transmission; or
after the plurality of to-be-sent uplink signals are multiplexed in the first uplink channel, determining that a priority of the first HARQ ACK signal is a high priority, and determining to send the plurality of to-be-sent uplink signals to the network apparatus.

10. The method according to claim 1 or 2, wherein the plurality of to-be-sent uplink signals comprise a control signal that is not allowed to be sent by the terminal apparatus within the non-active time of the discontinuous transmission, and the method further comprises:
receiving fourth indication information from the network apparatus, wherein the fourth indication information indicates a configuration of enhanced uplink skip; and
after the plurality of to-be-sent uplink signals are multiplexed in the first uplink channel, determining that the plurality of to-be-sent uplink signals comprise uplink data, and determining to send the plurality of to-be-sent uplink signals to the network apparatus; or after the plurality of to-be-sent uplink signals are multiplexed in the first uplink channel, determining that the plurality of to-be-sent uplink signals comprise no uplink data, and determining not to send the plurality of to-be-sent uplink signals to the network apparatus, wherein
the first uplink channel is a first data channel, and the first data channel is an uplink channel that is allowed to be sent by the terminal apparatus within the non-active time of the discontinuous transmission.

11. The method according to any one of claims 1 to 9, wherein the first time domain resource further overlaps with a time domain resource occupied by a first reference signal, and the method further comprises:
determining to discard the first reference signal, wherein the plurality of to-be-sent uplink signals comprise a HARQ ACK signal, or the plurality of to-be-sent uplink signals comprise a scheduling request, or the first uplink channel is a dynamically scheduled data channel, or the first uplink channel is a configured grant data channel; and
after determining to discard the first reference signal, determining whether to send the plurality of to-be-sent uplink signals to the network apparatus.

12. The method according to any one of claims 1 to 9, wherein the first time domain resource further overlaps with a time domain resource occupied by a first reference signal, and the method further comprises:
determining to send the plurality of to-be-sent uplink signals to the network apparatus; and
after determining to send the plurality of to-be-sent uplink signals to the network apparatus, determining to discard the first reference signal, wherein the plurality of to-be-sent uplink signals comprise a HARQ ACK signal, or the plurality of to-be-sent uplink signals comprise a scheduling request, or the first uplink channel is a dynamically scheduled data channel, or the first uplink channel is a configured grant data channel.

13. The method according to claim 1 or 2, wherein the first time domain resource further overlaps with a time domain resource occupied by a first reference signal, and the method further comprises:
determining not to send the plurality of to-be-sent uplink signals to the network apparatus; and
determining to send the first reference signal to the network apparatus.

14. The method according to claim 13, wherein the first reference signal is an uplink signal that is allowed to be sent by the terminal apparatus within the non-active time of the discontinuous transmission.

15. The method according to any one of claims 1 to 14, wherein the method further comprises:
receiving first indication information from the network apparatus, wherein the first indication information indicates a configuration of the discontinuous transmission, and the configuration of the discontinuous transmission is used to determine an active time of the discontinuous transmission.

16. The method according to any one of claims 1 to 15, wherein the discontinuous transmission is cell discontinuous reception Cell DRX.

17. A communication method, applied to a terminal apparatus, wherein the method further comprises:
determining a fifth time domain resource for sending a fourth uplink channel, wherein the fourth uplink channel is used to carry channel state information, or the fourth uplink channel is used to carry layer 1 reference signal received power, or the fourth uplink channel is an uplink channel in which a plurality of to-be-sent uplink signals are multiplexed, and an uplink signal carried on the fourth uplink channel comprises an uplink signal that is not allowed to be sent by the terminal apparatus within a non-active time of discontinuous transmission;
when the fifth resource overlaps with the non-active time of the discontinuous transmission, determining not to send the fourth uplink channel to the network apparatus; and
when the fifth time domain resource further overlaps with a time domain resource occupied by a first reference signal, determining to send the first reference signal to the network apparatus.

18. The method according to claim 17, wherein the first reference signal is an uplink signal that is allowed to be sent by the terminal apparatus within the non-active time of the discontinuous transmission.

19. A communication method, applied to a network apparatus, wherein the method comprises:
receiving a plurality of uplink signals from a terminal apparatus, wherein the plurality of uplink signals are multiplexed in a first uplink channel, and a first time domain resource used to send the first uplink channel overlaps with a non-active time of discontinuous transmission.

20. The method according to claim 19, wherein the plurality of uplink signals comprise an uplink signal that is allowed to be sent by the terminal apparatus within the non-active time of the discontinuous transmission.

21. The method according to claim 19 or 20, wherein the first uplink channel is an uplink channel that is allowed to be sent by the terminal apparatus within the non-active time of the discontinuous transmission.

22. The method according to any one of claims 19 to 21, wherein the plurality of uplink signals comprise a first uplink signal, wherein
the first uplink channel is a control channel, and the first uplink signal is an uplink signal that is allowed to be sent by the terminal apparatus within the non-active time of the discontinuous transmission; or
the first uplink channel is a data channel, and the first uplink channel is an uplink channel that is allowed to be sent by the terminal apparatus within the non-active time of the discontinuous transmission; or
the plurality of uplink signals comprise a HARQ ACK signal, and the first uplink signal is an uplink signal that is allowed to be sent by the terminal apparatus within the non-active time of the discontinuous transmission; or
the plurality of uplink signals comprise no HARQ ACK signal, and the first uplink channel is an uplink channel that is allowed to be sent by the terminal apparatus within the non-active time of the discontinuous transmission.

23. The method according to claim 19 or 20, wherein the plurality of to-be-sent uplink signals comprise a first hybrid automatic repeat request acknowledgement HARQ ACK signal, wherein
a priority of the first HARQ ACK signal is higher than a priority of a second uplink signal, and the second uplink signal is an uplink signal other than the first HARQ ACK signal in the plurality of to-be-sent uplink signals; or
a priority of the first HARQ ACK signal is higher than a priority of the first uplink channel, and the first uplink channel is an uplink channel that is not allowed to be sent by the terminal apparatus within the non-active time of the discontinuous transmission; or
a priority of the first HARQ ACK signal is a high priority.

24. The method according to claim 19 or 20, wherein the method further comprises:
sending fourth indication information to the terminal apparatus, wherein the fourth indication information indicates a configuration of enhanced uplink skip, and the plurality of to-be-sent uplink signals comprise uplink data and a control signal that is not allowed to be sent by the terminal apparatus within the non-active time of the discontinuous transmission.

25. The method according to any one of claims 19 to 22, wherein the first time domain resource further overlaps with a time domain resource occupied by a first reference signal, and the plurality of to-be-sent uplink signals comprise a HARQ ACK signal, or the plurality of to-be-sent uplink signals comprise a scheduling request, or the first uplink channel is a dynamically scheduled data channel, or the first uplink channel is a configured grant data channel.

26. The method according to any one of claims 19 to 25, wherein the method further comprises:
sending first indication information to the terminal apparatus, wherein the first indication information indicates a configuration of the discontinuous transmission, and the configuration of the discontinuous transmission is used to determine the non-active time of the discontinuous transmission.

27. The method according to any one of claims 19 to 26, wherein the discontinuous transmission is cell discontinuous reception Cell DRX.

28. A communication method, applied to a network apparatus, wherein the method comprises:
receiving a plurality of control signals and at least one piece of uplink data from a terminal apparatus, wherein
the plurality of control signals and the at least one piece of uplink data are multiplexed in a second uplink channel, the second uplink channel is an uplink channel configured for the at least one piece of uplink data, a second time domain resource used to send the second uplink channel overlaps with a non-active time of discontinuous transmission, the second time domain resource further overlaps with a first time domain resource, the first time domain resource is used to send a first uplink channel, the first uplink channel is an uplink channel in which the plurality of control signals are multiplexed when the terminal apparatus sends only the plurality of control signals to the network apparatus, and the first time domain resource overlaps with the non-active time of the discontinuous transmission.

29. The method according to claim 28, wherein the plurality of control signals comprise an uplink signal that is allowed to be sent by the terminal apparatus within the non-active time of the discontinuous transmission.

30. The method according to claim 28 or 29, wherein the first uplink channel is an uplink channel that is allowed to be sent by the terminal apparatus within the non-active time of the discontinuous transmission.

31. The method according to any one of claims 28 to 30, wherein the plurality of control signals comprise a first uplink signal, wherein
the first uplink channel is a control channel, and the first uplink signal is an uplink signal that is allowed to be sent by the terminal apparatus within the non-active time of the discontinuous transmission; or
the plurality of control signals comprise a HARQ ACK signal, and the first uplink signal is an uplink signal that is allowed to be sent by the terminal apparatus within the non-active time of the discontinuous transmission; or
the plurality of control signals comprise no HARQ ACK signal, and the first uplink channel is an uplink channel that is allowed to be sent by the terminal apparatus within the non-active time of the discontinuous transmission.

32. The method according to any one of claims 28 to 31, wherein the at least one piece of uplink data is data that is allowed to be sent by the terminal apparatus within the non-active time of the discontinuous transmission.

33. The method according to any one of claims 28 to 32, wherein the method further comprises:
sending first indication information to the terminal apparatus, wherein the first indication information indicates a configuration of the discontinuous transmission, and the configuration of the discontinuous transmission is used to determine an active time of the discontinuous transmission.

34. The method according to any one of claims 28 to 33, wherein the discontinuous transmission is cell discontinuous reception Cell DRX.

35. A communication method, applied to a network apparatus, wherein the method comprises:
receiving a first reference signal from a terminal apparatus, wherein a time domain resource occupied by the first reference signal overlaps with a fifth time domain resource used to send a fourth uplink channel, and the fifth resource overlaps with a non-active time of discontinuous transmission, wherein
the fourth uplink channel is used to carry channel state information, or the fourth uplink channel is used to carry layer 1 reference signal received power, or the fourth uplink channel is an uplink channel in which a plurality of uplink signals are multiplexed, and an uplink signal carried on the fourth uplink channel comprises an uplink signal that is not allowed to be sent by the terminal apparatus within the non-active time of the discontinuous transmission.

36. The method according to claim 35, wherein the first reference signal is an uplink signal that is allowed to be sent by the terminal apparatus within the non-active time of the discontinuous transmission.

37. A communication apparatus, comprising a module for performing the method according to any one of claims 1 to 16, or a module for performing the method according to claim 17 or 18, or a module for performing the method according to any one of claims 19 to 27, or a module for performing the method according to any one of claims 28 to 34, or a module for performing the method according to claim 35 or 36.

38. A communication apparatus, comprising a processor and an interface circuit, wherein the interface circuit is configured to receive an uplink signal from another communication apparatus and transmit the uplink signal to the processor or send an uplink signal from the processor to another communication apparatus, and the processor is configured to implement the method according to any one of claims 1 to 16, or the method according to claim 17 or 18, or the method according to any one of claims 19 to 27, or the method according to any one of claims 28 to 34, or the method according to claim 35 or 36 by using a logic circuit or executing code instructions.

39. A communication apparatus, comprising a processor and a memory, wherein
the memory is configured to store one or more computer programs or instructions, and the processor is configured to execute the one or more computer programs or instructions stored in the memory, to enable the communication apparatus to perform the method according to any one of claims 1 to 16, or the method according to claim 17 or 18, or the method according to any one of claims 19 to 27, or the method according to any one of claims 28 to 34, or the method according to claim 35 or 36.

40. A communication system, comprising a terminal apparatus and/or a network apparatus, wherein the terminal apparatus is configured to perform the method according to any one of claims 1 to 16 or the method according to claim 17 or 18, and the network apparatus is configured to perform the method according to any one of claims 19 to 27, or the method according to any one of claims 28 to 34, or the method according to claim 35 or 36.

41. A computer-readable storage medium, wherein the storage medium stores a computer program or instructions, and when the computer program or the instructions are executed by a communication apparatus, the method according to any one of claims 1 to 16 is implemented, or the method according to claim 17 or 18 is implemented, or the method according to any one of claims 19 to 27 is implemented, or the method according to any one of claims 28 to 34 is implemented, or the method according to claim 35 or 36 is implemented.

42. A computer program product, wherein the computer program product comprises a computer program, and when the computer program is run on a computer, the computer is enabled to perform the method according to any one of claims 1 to 16, or the method according to claim 17 or 18, or the method according to any one of claims 19 to 27, or the method according to any one of claims 28 to 34, or the method according to claim 35 or 36.
